# EUROPEAN PATENT APPLICATION

(11) **EP 1 647 717 A1**
(43) Date of publication of application: **19.04.2006**
(21) Application number: 03741497.6
(22) Date of filing: 18.07.2003
(51) Int. Cl.: F04D 29/44, F04D 5/00, H01L 37/00

(54) **MOTOR VEHICLE WITH THERMAL ELECTRIC POWER GENERATION APPARATUS**

(71) Applicant: Akamatsu, Norio, Tokushima-shi, Tokushima 770-0813 (JP); Nishikado, Hiroshi, Bunkyo-ku, Tokyo 112-0013 (JP)
(72) Inventor: AKAMATSU, Norio, Tokushima-shi, Tokushima 770-0813 (JP); NISHIKADO, Hiroshi, Bunkyo-ku, Tokyo 112-0006 (JP); YANO, Kensuke, Bunkyo-ku, Tokyo 112-0005 (JP)
(74) Representative: HOFFMANN EITLE
(86) International application number: PCT/JP2003/009174
(87) International publication number: WO 2005/008073

(57) **Abstract**

A thermal electric power generator 100 is installed at a location to which heat based on the heat generation by the engine 50 of a motor vehicle with thermal electric power generator 200, 300 is transmitted, the thermal electric power generator 100 comprising an electron emitter 2 for emitting electrons when heat is applied to the electron emitter 2 and an electron collector 3 for collecting the electrons emitted from the electron emitter, wherein by using the electron collector as a negative electrode and the electron emitter as a positive electrode, the electrons are caused to migrate from the electron collector to thereby generate electric power, and the electric power generated by the thermal electric power generator is supplied to the motor vehicle with thermal electric power generator.

## Description

### Field of the Invention

The present invention relates to a motor vehicle with thermal electric power generation apparatus having a thermal electric power generation apparatus (hereinafter, "a thermal electric power generator").

### Description of Related Art

Environment-friendly motor vehicles have been heretofore developed. As for such motor vehicles, for instance, a motor vehicle, in which solar batteries are mounted as electric power generators for generating electric power by using sunlight and supply electric power to replenish the electric power generated by the driving power of an engine of the motor vehicle and used as the electric power for operating an electrical system of the motor vehicle, is disclosed in Japanese Patent Laid-open Publication No. 12-253504.

In the above-mentioned patent, however, the amount of electric power generated by the solar battery depends on the sun (sunlight), being varied depending on the condition such as hours of sunlight and weather, and thus, there was a problem that the supply of stable electric power was difficult to be obtained.

One of the objects of the present invention is to provide a motor vehicle with thermal electric power generator having an electricity generator that is capable of supplying a more stable electric power while paying due consideration to the environment.

### Summary of the Invention

In order to solve the problem as described above, there is provided, according to the first aspect of the present invention, a motor vehicle with thermal electric power generator which is a motor vehicle with thermal electric power generator 200, 300 having a thermal electric power generator 100 comprising:
an electron emitter 2 for emitting electrons (e) when heat is applied to the electron emitter 2; an electron accelerator 4 for accelerating the electrons emitted from the electron emitter 2 by applying electric field between the electron emitter and the electron accelerator; an electron collector 3 for collecting the electrons emitted from the electron emitter 2 and accelerated by the electron accelerator 4; and an insulating member 41 for electrically insulating the electron collector 3 from the electron accelerator 4,
wherein the thermal electric power generator causes the electrons to migrate from the electron collector to thereby generate electric power by using the electron collector as a negative electrode and the electron emitter as a positive electrode, and
wherein the motor vehicle with thermal electric power generator uses the electrical energy generated by the thermal electric power generator installed at a location to which heat based on heat generation by an engine of the motor vehicle with thermal electric power generator is transmitted, as at least a part of driving energy for driving the engine.

According to the motor vehicle with thermal electric power generator of the first aspect of the present invention, in the thermal electric power generator, the electrons emitted from the electron emitter when heat is applied thereto are accelerated by the electron accelerator and collected by the electron collector, making it possible to generate electric power when the excess electrons in the electron collector are caused to migrate to the electron emitter lacking in electrons. Namely, the motor vehicle with thermal electric power generator is equipped with a thermal electric power generator which is capable of generating electric power by converting the thermal energy into the electrical energy.

The engine provided as an internal combustion engine in the motor vehicle with thermal electric power generator generates heat based on its driving operation, and thus, the environment surrounding the engine and the exhaust manifold system for exhausting gas from the engine becomes high in temperature.

Consequently, in the motor vehicle with thermal electric power generator, by installing the thermal electric power generator at a location to which heat based on the heat generation by the environment surrounding the engine and the exhaust manifold system is transmitted, heat can be applied to the thermal electric power generator, whereby the thermal electric power generator can generate electric power. The thermal electric power generator supplies the generated electric power to the motor vehicle with thermal electric power generator, and the electrical energy of the electric power can be used as at least a part of the driving energy for driving the engine of the motor vehicle with thermal electric power generator. As described above, since the thermal energy is converted into the electrical energy to thereby generate electric power, the motor vehicle with thermal electric power generator becomes a motor vehicle which pays due consideration to the environment, and it makes it possible to provide stable electric power supply because the thermal electric power generator is always installed at a location with high temperature.

According to the second aspect of the present invention, there is provided a motor vehicle with thermal electric power generator, which is a motor vehicle with thermal electric power generator 200, 300 having a thermal electric power generator 100 comprising:
an electron emitter for emitting electrons (e) when heat is applied to the electron emitter; an electron accelerator for accelerating the electrons emitted from the electron emitter by applying an electric field between the electron emitter and the electron accelerator; and an electron collector for collecting the electrons emitted from the electron emitter and accelerated by the electron accelerator; and an insulating member for electrically insulating the electron collector from the electron accelerator,
wherein the thermal electric power generator causes the electrons to migrate from the electron collector to thereby generate electric power by using the electron collector as a negative electrode and the electron emitter as a positive electrode, and
wherein the motor vehicle with thermal electric power generator uses the electrical energy generated by the thermal electric power generator installed at a location to which heat base on heat generation of an engine of the motor vehicle with thermal electric power generator is transmitted, as at least a part of electrical energy for operating an electrical system of the motor vehicle with thermal electric power generator.

According to the motor vehicle with thermal electric power generator of the second aspect of the present invention, in the thermal electric power generator, the electrons emitted from the electron emitter when heat is applied thereto are accelerated by the electron accelerator and collected by the electron collector, making it possible to generate electric power when the excess electrons in the electron collector are caused to migrate to the electron emitter lacking in electrons. Namely, the motor vehicle with thermal electric power generator is equipped with a thermal electric power generator which is capable of generating electric power by converting the thermal energy into the electrical energy.

The engine provided as an internal combustion engine in the motor vehicle with thermal electric power generator generates heat based on its driving operation, and thus, the area surrounding the engine and the area surrounding the exhaust manifold system for exhausting gas from the engine become high in temperature.

Consequently, in the motor vehicle with thermal electric power generator, by installing the thermal electric power generator at a location to which heat based on the heat generation by the environment surrounding the engine and the exhaust manifold system is transmitted, heat can be applied to the thermal electric power generator, allowing the thermal electric power generator to generate electric power. The thermal electric power generator supplies the generated electric power to the motor vehicle with thermal electric power generator, allowing the motor vehicle with thermal electric power generator to use the electrical energy of the electric power as at least a part of electrical energy for operating electrical system. As described above, since the thermal energy is converted into the electrical energy to generate electric power, the motor vehicle with thermal electric power generator becomes a motor vehicle which pays due consideration to the environment, making it possible to provide stable electric power supply because the thermal electric power generator is always installed at a location with high temperature.

In the motor vehicle with thermal electric power generator of the present invention, the thermal electric power generator is preferably installed adjacently to the engine. By installing the thermal electric power generator adjacently to the engine which becomes highest in temperature in the motor vehicle with thermal electric power generator, it is made possible to more efficiently generate electric power.

In the motor vehicle with thermal electric power generator of the present invention, the engine is preferably a rotary engine. When the engine of the motor vehicle with thermal electric power generator is a rotary engine, because the heat generated by the engine is higher in temperature and the vibration during the driving of the engine is small, it is possible for the thermal electric power generator to more efficiently generate electric power.

In the motor vehicle with thermal electric power generator of the present invention, the engine may be a hydrogen engine for generating electric power by combusting hydrogen as its fuel and may have an electrolyzer 60 for electrolyzing water, wherein the hydrogen engine may be supplied with the hydrogen and oxygen generated by supplying to the electrolyzer the electric power generated by the thermal electric power generator. When the engine of the motor vehicle with thermal electric power generator is a hydrogen engine for generating electric power by combusting hydrogen as its fuel and the motor vehicle with thermal electric power generator has an electrolyzer for electrolyzing water, it is possible to supply the hydrogen engine with the hydrogen and oxygen generated by supplying to the electrolyzer the electric power generated by the thermal electric power generator.

In the motor vehicle with thermal electric power generator of the present invention, the electron emitter is preferably an electrode 20 formed by planting a plurality of carbon nanotubes 22 quasi-vertically on a conductive substrate 21. When the thermal electric power generator of the motor vehicle with thermal electric power generator uses as an electron emitter an electrode having a plurality of carbon nanotubes planted quasi-vertically on a conductive substrate, because the plurality of carbon nanotubes planted on the conductive substrate are arranged in a highly aligned manner, it becomes possible to apply an electric field along the direction of their length, causing the electric field to be concentrated at the tips of the carbon nanotubes and whereby the electrons are locally concentrated at the tips. Because of this, the electrical resistance is reduced and it becomes easier for the current to flow, making it possible to emit electrons at a high efficiency from the tips of the carbon nanotubes, further increasing the energy conversion efficiency.

### Brief Description of the Drawings

Fig. 1 is a schematic illustration showing the periphery of the engine of the motor vehicle with the thermal electric power generator of the present invention;
Fig. 2 is a block diagram showing the periphery of the engine of the motor vehicle with thermal electric power generator according to the first embodiment of the present invention;
Fig. 3 is a cross-sectional side view showing a general structure of the thermal electric power generator according to the first embodiment of the present invention;
Fig. 4(a) is a cross-sectional side view showing an electrode as an electron emitter in which carbon nanotubes are provided on one side;
Fig. 4(b) is a cross-sectional side view showing an electrode as an electron emitter in which carbon nanotubes are provided on both sides while extending therethrough;
Fig. 5 is an illustration showing the utilization of the member containing carbon nanotubes shown in Fig.4 (b);
Fig. 6 is a block diagram showing the periphery of the engine of the motor vehicle with thermal electric power generator according to the second embodiment of the present invention;
Fig. 7 is a cross-sectional side view showing a general structure of the thermal electric power generator according to the second embodiment of the present invention;
Fig. 8 is a cross-sectional view showing the first modified example of a hydrogen producer that is made by combining the thermal electric power generator and the electrolyzer provided in the motor vehicle with thermal electric power generator of the present invention;
Fig. 9 is a cross-sectional view showing the second modified example of a hydrogen producer (the thermal electric power generator and the electrolyzer) of the motor vehicle with thermal electric power generator of the present invention;
Fig. 10 is a cross-sectional view showing the third modified example of a hydrogen producer (the thermal electric power generator and the electrolyzer) of the motor vehicle with thermal electric power generator of the present invention;
Fig. 11 is a cross-sectional view showing the forth modified example of a hydrogen producer (the thermal electric power generator and the electrolyzer) of the motor vehicle with thermal electric power generator of the present invention;
Fig. 12 is a cross-sectional view showing the fifth modified example of a hydrogen producer (the thermal electric power generator and the electrolyzer) of the motor vehicle with thermal electric power generator of the present invention;
Fig. 13 is a cross-sectional view showing the sixth modified example of a hydrogen producer (the thermal electric power generator and the electrolyzer) of the motor vehicle with thermal electric power generator of the present invention;
Fig. 14 is a cross-sectional view showing the seventh modified example of a hydrogen producer (the thermal electric power generator and the electrolyzer) of the motor vehicle with thermal electric power generator of the present invention;
Fig. 15 is a cross-sectional view showing the eighth modified example of a hydrogen producer (the thermal electric power generator and the electrolyzer) of the motor vehicle with thermal electric power generator of the present invention;
Fig. 16 is a cross-sectional view showing the ninth modified example of a hydrogen producer (the thermal electric power generator and the electrolyzer) of the motor vehicle with thermal electric power generator of the present invention;
Fig. 17 is a cross-sectional view showing the tenth modified example of a hydrogen producer (the thermal electric power generator and the electrolyzer) of the motor vehicle with thermal electric power generator of the present invention;
Fig. 18 is a cross-sectional view showing the eleventh modified example of a hydrogen producer (the thermal electric power generator and the electrolyzer) of the motor vehicle with thermal electric power generator of the present invention;
Fig. 19 is a cross-sectional view showing the twelfth modified example of a hydrogen producer (the thermal electric power generator and the electrolyzer) of the motor vehicle with thermal electric power generator of the present invention;
Fig. 20 is a cross-sectional view showing the thirteenth modified example of a hydrogen producer (the thermal electric power generator and the electrolyzer) of the motor vehicle with the thermal electric power generator of the present invention;
Fig. 21 is a cross-sectional view showing the fourteenth modified example of a hydrogen producer (the thermal electric power generator and the electrolyzer) of the motor vehicle with thermal electric power generator of the present invention;
Fig. 22 is a cross-sectional view showing the fifteenth modified example of a hydrogen producer (the thermal electric power generator and the electrolyzer) of the motor vehicle with thermal electric power generator of the present invention;
Fig. 23 is an illustration showing a voltage period of an alternating power supply and a generated current corresponding to the voltage period;
Fig. 24 is an illustration of a thermal electricity generation phenomenon according to the fifteenth modified example of a hydrogen producer (the thermal electric power generator and the electrolyzer);
Fig. 25 is an illustration of a thermal electricity generation phenomenon according to the fifteenth modified example of a hydrogen producer (the thermal electric power generator and the electrolyzer);
Fig. 26 is a cross-sectional view showing the sixteenth modified example of a hydrogen producer (the thermal electric power generator and the electrolyzer) of the motor vehicle with thermal electric power generator of the present invention;
Fig. 27 is a cross-sectional view showing the seventeenth modified example of a hydrogen producer (the thermal electric power generator and the electrolyzer) of the motor vehicle with thermal electric power generator of the present invention.

### Best Mode for Carrying Out the Invention

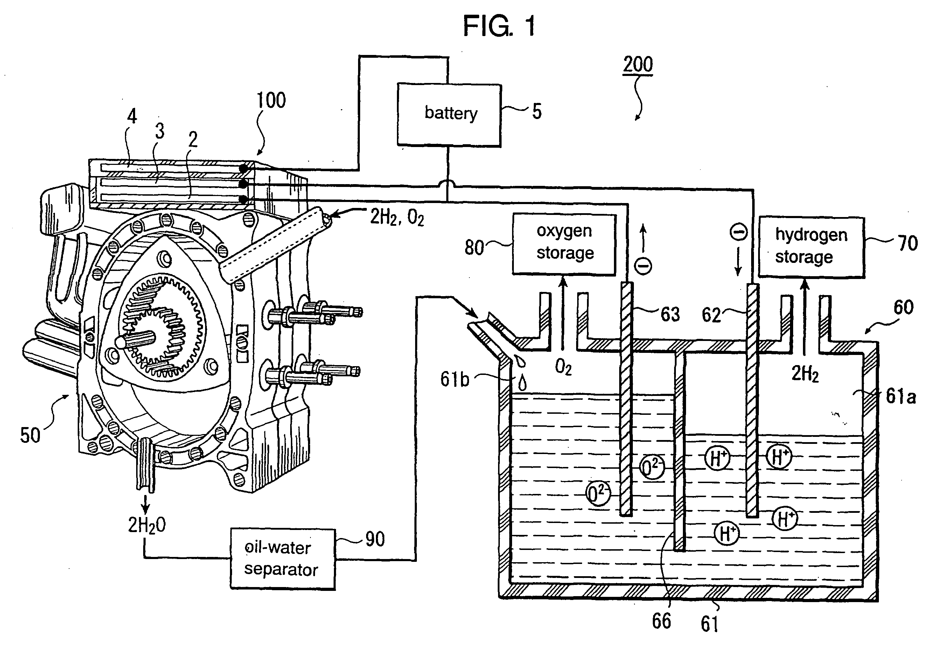

Some embodiments of the present invention are described in greater details herein below with reference to the accompanying drawings shown in Figs. 1 to 27.

### [First Embodiment]

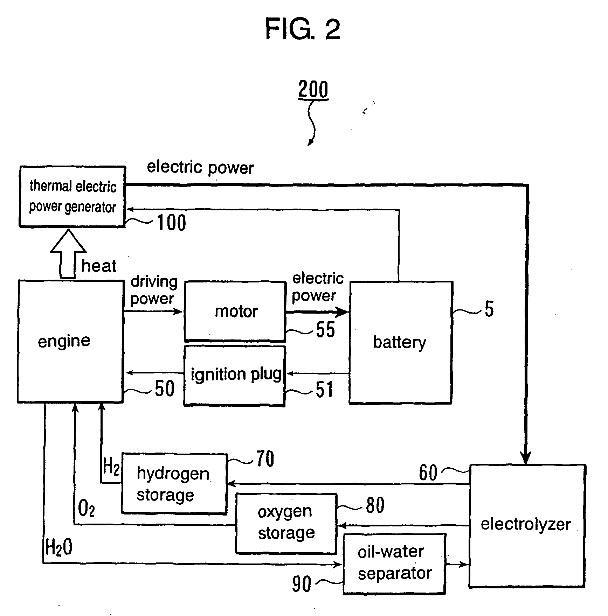

Fig. 1 is an illustration showing the periphery of an engine which is an internal combustion engine in a motor vehicle with thermal electric power generator in accordance with the present invention. Fig.2 is a block diagram showing the periphery of the engine.

As shown in Figs. 1 and 2, a motor vehicle with thermal electric power generator 200 includes an engine 50 for outputting power to a wheel driving unit (not shown) of the motor vehicle with thermal electric power generator 200, a thermal electric power generator 100 attached to an outer surface of the engine 50, an electrolyzer 60 for electrolyzing water by using electric power generated by the thermal electric power generator 100, a battery 5 for storing electric power for operating an electrical system (not shown) of the motor vehicle with thermal electric power generator 200, a hydrogen storage section 70 for storing hydrogen as a fuel to be combusted in the engine 50, an oxygen storage section 80 for storing oxygen for combusting the hydrogen, an oil-water separator 90 for separating water produced in the engine, and the like.

The engine 50 is a rotary engine, for example. More specifically, the engine 50 is a hydrogen engine in which power is generated by combusting hydrogen.

The engine 50, in which a plug 51 ignites the hydrogen and oxygen supplied into the inside of the engine respectively from the hydrogen storage section 70 and the oxygen storage section 80 for filling the engine and the hydrogen is combusted, drives and generates power. The plug 51 is supplied with the electricity from the battery 5 for the ignition.

The power generated by the engine 50 is transmitted to the wheel driving unit (not shown) and a motor 55. The wheel driving unit (not shown) drives an axle and wheels (not shown) to run the motor vehicle with thermal electric power generator 200.

The motor 55 is installed in an electricity generator (not shown) and rotates using the driving force of the engine 50 to generate electric power, then stores (charges) the generated electric power in the battery 5.

Combustion of hydrogen in the engine 50 produces water (H₂O).

(2H₂ + O₂ → 2H₂O)

The produced water is transferred to the oil-water separator 90 to be described below. Then the water is purified by separating from the water the engine oil mixed in the water, and the purified water is transferred to a reaction vessel 61 of an electrolyzer 60 to be described below.

The thermal electric power generator 100 is an electric power generator in which the electric power generation efficiency is enhanced according to the rise in temperature by being heated. The thermal electric power generator 100 is installed adjacently to the engine 50, generating electric power by using the heat generated by the engine 50 which burns hydrogen.

Because the engine 50 is a rotary engine, the heat generated is generally higher. For instance, the inside of the engine 50 reaches a temperature of as high as 1000 to 3000ºC, and the outside (the external wall surface) of the engine 50 reaches a temperature of 100 to 300ºC. As described above, the engine 50 generates heat to reach a temperature sufficient for the thermal electric power generator 100 to generate electric power.

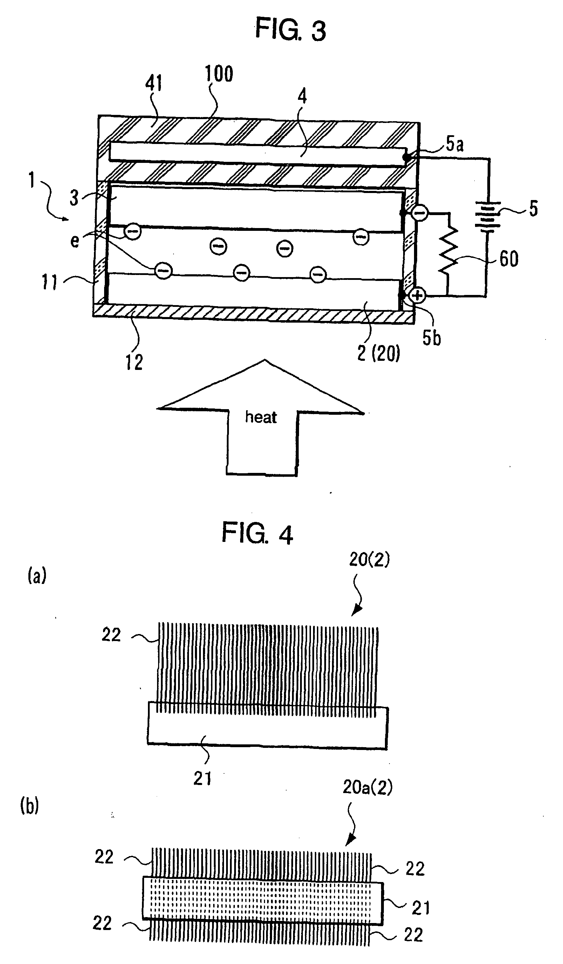

As shown in Fig. 3, the thermal electric power generator 100 comprises a vacuum vessel 1, an electron emitter 2 (an electrode 20) installed in the vacuum vessel 1 for emitting electrons present in the emitter when the temperature of the emitter increases upon being heated, and an electron collector 3 for collecting the electrons emitted from the electron emitter 2.

An electron accelerator 4 is also installed apart from the surface of the electron collector 3, the surface being opposite to the side of the electron emitter 2, and the electron emitter 2 and the electron accelerator 4 are each connected with a battery 5 serving as an electric field generating power source.

The vacuum vessel 1 comprises an outer frame 11 having an internal space therein and a heat conductive member 12 mounted on one surface of the outer frame 11, and the internal space is maintained in a vacuum state. The outer frame 11 is made of an adiabatic and electrical insulating material. The heat conductive member 12 is made of substances having a high heat conductivity.

The thermal electric power generator 100 is attached to the outer wall surface, with the heat conductive member 12 being in contact with the outer wall surface of the engine 50.

The electron emitter 2 emits electrons in an electric field. More specifically, as shown in Fig. 4(a), an electrode 20 which has a plurality of carbon nanotubes 22 quasi-vertically planted on a conductive substrate 21 is used for the electron emitter 2.

The phenomenon in which electrons are emitted is a phenomenon generally called as "Field Emission", wherein when a strong electric field is applied to the surface of a solid body, the potential-energy barrier of the surface which confines electrons within the solid body becomes lower and thinner, causing the electrons to be emitted into a vacuum by virtue of the Tunneling Effect. In particular, when a substance having a small radius of curvature is placed in an electric field, an electric charge is concentrated in its tip having a small radius of curvature to thereby cause the electrons to be easily emitted. This phenomenon is called as "A Tip Concentration Phenomenon of Electric Charge", which is a well-known phenomenon in the field of electric discharge engineering. More particularly, a substance having a diamond structure has a negative electron affinity and has a property in which conductive electrons in the conduction band can be easily emitted.

The materials having such diamond structure include the substances made mainly of carbon atoms, such as a carbon nanotube 22. Because the carbon nanotube 22 is a thin substance having a small diameter, the electrons in the carbon nanotube 22 are concentrated in the region nearest to a positive potential by the Coulomb force due to the tip concentration phenomenon of electric charge. When the electric field applied to the carbon nanotube 22 is greater than the threshold value of electron emission, a part of the electrons concentrated in the tip of the carbon nanotube 22 having a small radius of curvature is emitted into a space. Moreover, the carbon nanotube 22 is an extremely thin tube-like substance having a few nanometers in diameter and emits electrons even in a weak electric field as well.

Along with the increase of thermal energy of the electron emitter 2 (electrode 20) due to the heat generated by the engine 50, the kinetic energy of electrons in the carbon nanotube 22 has increased, allowing the electrons having sufficient kinetic energy to be emitted into the vacuum vessel 1.

As for the electron emitter 2, as shown in Fig. 4(b), an electrode 20a having a plurality of carbon nanotubes 22 quasi-vertically protruding from the both sides of a conductive substrate 21 may be used. The electrode 20a has a plurality of carbon nanotubes 22 protruding in a highly aligned manner and extending through the conductive substrate 21.

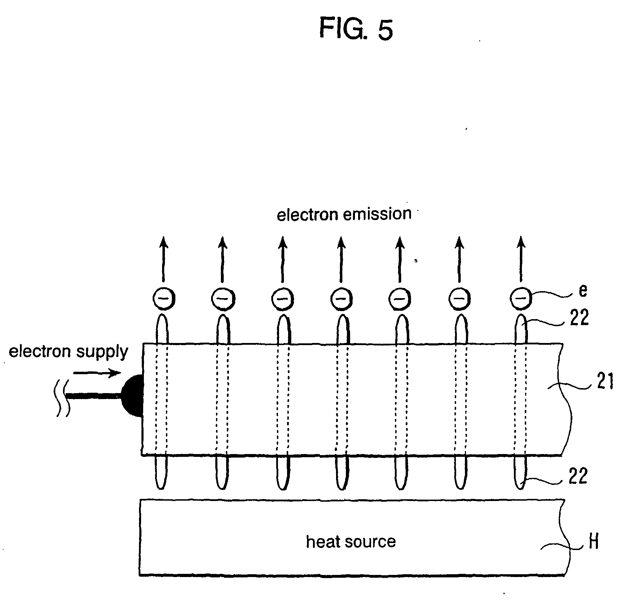

The amount of electron emission from the carbon nanotubes 22 increases exponentially in proportion to its surface temperature. To cause the carbon nanotubes 22 to emit a large amount of electrons, the energy of the electrons inside the carbon nanotubes 22 is needed to be increased by raising the surface temperature of the carbon nanotubes 22 by means of a heat source H as shown in Fig. 5. Since the heat is conducted very fast within the carbon nanotube 22, the electron emission efficiency can be enhanced by conducting the heat directly to the carbon nanotubes 22 than by conducting the thermal energy from the heat source H indirectly to the carbon nanotubes 22 through a conductive substrate 21. Accordingly, The most suitable structure for the electron emitter 2 is a such structure as that the carbon nanotubes 22 protrude from the both sides of the electrode (conductive substrate 21) and extend through the electrode (conductive substrate 21), as shown in Fig. 4(b).

As shown in Fig. 5, when one end of the carbon nanotube 22 protruding from both sides of the conductive substrate 21 is directly heated by the heat source H, causing the electrons to be emitted from the other end of carbon nanotube 22 protruding from the surface facing the electron collector 3, the thermal energy is efficiently converted to the kinetic energy of the electrons. In order to sustain the continued electron emission from the tips (the other ends) of the carbon nanotubes 22, it is necessary to supply electrons to the carbon nanotube 22 through the conductive substrate 21 and the like. The electrons to be supplied are those electrons which originated from the electrons emitted from the carbon nanotubes 22 and returned back again to the electron emitter 2 (conductive substrate 21) through the electron collector 3 and load resistance. When the electron emission and the electron supply as shown in Fig. 5 are continuously repeated, the electrons circulate and do not dissipate. The kinetic energy of the electrons is released to the outside when the electrons pass through the load resistance, but the thermal energy corresponding to the released energy is supplied by the heat source H, and thus, the energy conservation law is satisfied.

As for the heat source, any waste heat energy, such as the thermal energy produced by the engine of a motor vehicle and the thermal energy produced when the garbage is burnt in an incinerator, may be effectively used. A technology which effectively uses such waste heat energy is a technology needed for sustaining the earth environment.

The electron collector 3 absorbs and collects the electrons flying toward the electron accelerator 4 in the vacuum vessel 1. The electron collector 3 is made of a conductive material, and is preferably made of a metal having a low electric resistance such as gold, silver, nickel and the like. The electron collector 3 may also be made of a conductive organic compound, and when it is so made, it can be made thinner, lighter, more workable, and to have a higher melting point.

A transparent conductive substrate can be used as the electron collector 3. By using a transparent or semi-transparent conductive substance, a thermal electric power generator having a fashionable design with transparency can be provided.

The electron accelerator 4 is made of a conductive substance similar to the electron collector 3. The electron accelerator 4 is provided while being integrated with the outer frame 11 of the vacuum vessel 1, is surrounded by an insulating member 41, and is electrically insulated from any other conductors than the battery 5. Since the electron accelerator 4 is electrically insulated from the electron emitter 2, the amount of consumed electric power between the electron emitter 2 and the electron accelerator 4 is almost zero.

In the thermal electric power generator 100 as have been described above, in case that the electron collector 3 becomes in an electron-excessive state because of the increase of electrons collected by the electron collector 3 beyond the steady state, while on the other hand the electron emitter 2 emits electrons to become electron-depletive, when a load resistance such as an electric load is electrically connected between the electron collector 3 working as a negative member (negative electrode) and the electron emitter 2 working as a positive member (positive electrode), excess electrons collected by the electron collector 3 move through the load resistance to come back to the electron-depleted electron emitter 2. This circulation of electrons enables to obtain the electric energy.

The battery 5 is a direct current voltage generator for storing electric power for operating the electric system not shown in the figure of the motor vehicle with thermal electric power generator 200.

The battery 5 includes a positive terminal 5a and a negative terminal 5b, the positive terminal 5a is connected to the electron accelerator 4 of the thermal electric power generator 100, and the negative terminal 5b is connected to the electron emitter 2. The electric flux line (electric field) from the electron accelerator 4 to the electron emitter 2 is thereby generated.

The electrolyzer 60 has a hydrogen generating vessel 61a and an oxygen generating vessel 61b, and comprises a reaction vessel 61 for storing water therein, a negative electrode 62 inserted in the hydrogen generating vessel 61a, and a positive electrode 63 inserted in the oxygen generating vessel 61b. A carbon rod for example can be used as the negative electrode 62 and the positive electrode 63.

In the reaction vessel 61 a separator 66 is provided between the hydrogen generating vessel 61a and the oxygen generating vessel 61b so as to separate these two vessels in the upper portion and to communicate between them in the lower portion.

The water stored in the reaction vessel 61 can move from the hydrogen generating vessel 61a to the oxygen generating vessel 61b and vice versa, and the hydrogen and oxygen generated in the hydrogen generating vessel 61a and the oxygen generating vessel 61b respectively are collected in their respective upper portions.

The negative electrode 62 is connected to the electron collector 3 of the thermal electric power generator 100 while the positive electrode 63 is connected to the electron emitter 2 of the thermal electric power generator 100.

When the thermal electric power generator 100 generates power, the electron collector 3 collects electrons and becomes rich in electrons, and supplies electrons to the negative electrode 62. Then hydrogen (H₂) is generated by a chemical reaction according to the following equation (1) taking place on the surface of the negative electrode 62.

**4H**^{**+**} **+ 4e**^{**-**} **→ 2H**_{**2**} **(1)**

Further, oxygen (O₂) is generated by a chemical reaction according to the following equation (2) taking place on the surface of the positive electrode 63, and the electrons are transferred to the electron emitter 2.

**4OH → O**_{**2**} **+ 2H**_{**2**}**O + 4e**^{**-**} **(2)**

Equation 2 may be rewritten by equation (2') or (2").

**( 2H**_{**2**}**O → O**_{**2**} **+ 4H**^{**+**} **+ 4e**^{**-**} **)** **(2')**

**( 2O**_{**2**}^{**-**} **→ O**_{**2**} **+ 4e**^{**-**} **)** **(2")**

As can be appreciated, water is electrolyzed in the electrolyzer 60 as shown in equation (3) as follows:

**2H**_{**2**}**O → 2H**_{**2**} **+ O**_{**2**} **(3)**

The hydrogen generated in the hydrogen generating vessel 61a is transferred to and stored in a hydrogen storage section 70 and the oxygen generated in the oxygen generating vessel 61b is transferred to and stored in an oxygen storage section 80.

In order to facilitated the water electrolysis, a sodium hydroxide (NaOH) for example is added to and dissolved in the water stored in the reaction vessel 61.

The hydrogen storage section 70 and the oxygen storage section 80 are storages for storing hydrogen and oxygen, respectively. These storages may be for example a hydrogen cylinder and an oxygen cylinder, or a hydrogen tank and an oxygen tank. The hydrogen storage section 70 is preferably a storage made of a hydrogen storing alloy.

The oil-water separator 90 is a device for purifying the water being produced in the engine 50 and containing the engine-oil mixed therein to thereby supply the purified water to the reaction vessel 61 of the electrolyzer 60.

The oil-water separator 90 is installed, for example, on the side of the exhaust port of the engine 50 to collect water (water vapor) contained in the exhaust gas of the engine 50. The oil separation is performed by removing any oil including engine-oil accumulated on the top layer of the water layer forming a lower layer to separate engine-oil mixed in the water to purify the water.

The operation of the motor vehicle with thermal electric power generator 200 in accordance with the present invention are described in greater details herein below.

Hydrogen and oxygen from the hydrogen storage section 70 and oxygen storage section 80, respectively, are supplied and introduced to the inside of the engine 50, while the spark plug 51 ignites with the power supply from the battery 5, then the hydrogen is combusted in the engine 50 to drive the engine 50.

The power output from driving the engine 50 is transferred to a wheel driving unit (not shown) and the motor 55. The driving unit not shown in the figure drives the axle and wheels to run the motor vehicle with thermal electric power generator 200. The motor 55 is revolved by the driving power of the engine 50 to generate electric power, and the electric power generated in this manner is stored in the battery 5.

In the thermal electric power generator 100, the electron emitter 2 is connected to the negative terminal 5b of the battery 5 and the electron accelerator 4 is connected to the positive terminal 5a of the battery 5. When the battery 5 applies the electro motive force, the electrons move to the surface of the electron emitter 2, causing the electron emitter 2 to be charged negatively. On the other hand, the positive holes move to the surface of the electron accelerator 4, causing the electron accelerator 4 to be charged positively. An electric field is produced between the electron accelerator 4 and the electron emitter 2.

When the heat generated by driving the engine 50 in this condition is conducted through the heat conductive member 12 to the inside of the vacuum vessel 1, the electrons having higher kinetic energy after receiving the thermal energy are generated on the surface (the carbon nanotubes 22 of the electrode 20) of the electron emitter 2. Since the outer frame 11 of the vacuum vessel 1 has a heat insulating property, the heat conducted to the inside thereof is not conducted again to anywhere outside thereof to prevent any heat loss.

When electrons are further heated by the heat generated by the engine 50 to have more kinetic energy, electrons are emitted from the tips of the carbon nanotubes 22 of the electron emitter 2 (electrode 20) to the internal space.

The electrons emitted in this manner are accelerated by the electric field and fly toward the electron accelerator 4. Since the electron accelerator 4 is insulated from the electron emitter 2, electrons are not allowed to reach the electron accelerator 4, rather collide with the electron collector 3 interposed between the electron accelerator 4 and the electron emitter 2, and are absorbed and collected thereby. As the internal space between the electron emitter 2 and the electron collector 3 is kept in vacuum, flying electrons can move without colliding with any gas molecules, resulting in the reduction of energy loss.

When the electrons are emitted into the internal space from the electron emitter 2, the electrons need to have a sufficient energy to leap over the energy gap formed by the substance to which the electrons belong. In other words, the electron emitter 2 must provide sufficient energy to the electrons to be emitted therefrom to fly into the space. When the electrons are emitted into the internal space, the electron emitter 2 loses the energy that it gave to the electrons. Thus, the electron emitter 2 loses some minute energy and the temperature, for example, of the electron emitter 2 decreases. Consequently, the electrons cannot be continuously emitted unless the lost energy is replenished. For that reason, the thermal electric power generator 100 is designed to replenish the lost energy with the heat generated by the engine 50 and conducted from the outside through the heat conductive member 12, so as to sustain the electron emission from the electron emitter 2. In other words, the thermal electric power generator 100 converts the thermal energy produced by the engine 50 into the electric energy, so as to enable continued generation of electric power.

Now consider the electric power consumption by the electron accelerator 4. To accelerate and allow the electrons to fly, a positive voltage must be applied to the electron accelerator 4, thus the electromotive force by the battery 5 is necessary. Since the electron accelerator 4 is solely used for the acceleration of the electrons, the electrons do not collide with the electron accelerator 4. In other words, the battery 5 generates solely the electric field to accelerate the electrons to thereby exert Coulomb force on the electrons, so that the electric power supplied from the electron accelerator 4 to the battery 5 is almost null. Thus, the electric power consumption of the battery 5 used for accelerating the electrons is almost zero. More specifically, the electric power consumed during the electric power generation by the thermal electric power generator 100 is almost zero, and the conversion from the thermal energy to the electric energy is highly efficient, so that the thermal electric power generator 100 can be said to be highly practical.

The electron collector 3 becomes electron-excessive because it holds more electrons than the steady state due to the collected electrons, and is negatively charged in a way similar to the negative electrode of the battery. The electron emitter 2, on the other hand, emits the electrons and becomes electron-depleted so as for the vacuum vessel 1 to be positively charged in a way similar to the positive electrode of a battery.

In that condition, by using the electron emitter 2 as the positive node (positive electrode) and the electron collector 3 as the negative node (negative electrode) and by electrically connecting the electrolyzer 60, which is an electric load, as the resistance across two nodes, the excess electrons collected in the electron collector 3 moves through the electrolyzer 60 to return to the electron-depleted electron emitter 2. The thermal electric power generator 100 generates electric power by virtue of the electron circulation phenomenon, allowing the electrolyzer 60 to obtain electric power to thereby enable the electrolysis of the water.

The hydrogen and oxygen produced during the electrolysis of water by the electrolyzer 60 are transferred to and stored in the hydrogen storage section 70 and the oxygen storage section 80, respectively. The hydrogen and oxygen are then used for the fuel of the engine 50.

The water produced after the combustion of hydrogen in the engine 50 is purified by the oil-water separator 90, and transferred to the reaction vessel 61 of the electrolyzer 60. The water produced after the combustion of hydrogen is again electrolyzed to hydrogen and oxygen to be reused as fuel.

As can be appreciated from the foregoing description, the thermal electric power generator 100 uses the waste heat developed by driving the engine 50 which is an internal combustion engine of the motor vehicle with thermal electric power generator 200, as the thermal energy source for producing electrons, converting the waste heat produced by the engine 50 into the electric power to generate electric power. The thermal electric power generator 100 is thus capable of stably supplying to the motor vehicle with thermal electric power generator 200 the electric power generated by converting the thermal energy in the waste heat produced by the engine 50 into the electric energy.

The thermal electric power generator 100 consumes almost no electric power supplied from the battery 5 for generating the electric field in order to cause the electrons to fly and be collected, so that the energy loss for generating electric power is negligible.

In other words, the thermal electric power generator 100, which has almost no energy loss for generating electric power, and which generates electric power by using the waste heat produced by the engine 50 to be driven for running the motor vehicle with thermal electric power generator 200, allows the thermal energy to be suitably converted to the electric energy, enabling the electric power generation with a higher efficiency of energy conversion.

The thermal electric power generator 100, which converts the heat produced by the engine 50 into the electric power, decreases the temperature of the engine 50 in accordance with the energy conservation law. In other words, the thermal electric power generator 100 also has the function of a radiator for maintaining the engine 50 so as not to be unnecessarily overheated.

By using the electrode 20 having a plurality of carbon nanotubes 22 planted in a generally vertical direction on the conductive substrate 21 for the electron emitter 2, the longitudinal direction of almost all of the carbon nanotubes 22 are in generally parallel to each other, and then the electric field can be applied in the longitudinal direction of almost all of the carbon nanotubes 22. Consequently, the electric field is concentrated at the tips of the carbon nanotubes 22, and the electrons are locally concentrated at the tips so that the electrons are emitted therefrom with a higher efficiency to effectively allow a further increase of the energy conversion efficiency.

The thermal electric power generator 100 in accordance with the present invention does not require any special materials (such materials commercially unavailable in the market or expensive to manufacture), as well as has a simple structure, so that the manufacturing cost is low and the thermal electric power generator 100 can be used widely.

The motor vehicle with thermal electric power generator 200, which, as has been described above, has the thermal electric power generator 100 attached to the engine 50, can be supplied with the electric power generated by the thermal electric power generator 100 using the waste heat generated by the engine 50 being driven for running the motor vehicle with thermal electric power generator 200.

The waste heat from the engine 50 that produces heat during running the motor vehicle with thermal electric power generator 200 is stably transferred to the thermal electric power generator 100. The thermal electric power generator 100 in turn converts the thermal energy of the waste heat into the electric energy to generate electric power in order to stably supply the electric power to the motor vehicle with thermal electric power generator 200.

The motor vehicle with thermal electric power generator 200 uses, as the fuel of the engine 50, the hydrogen and oxygen obtained by the electrolyzer 60 which uses the electric power generated by the thermal electric power generator 100 to electrolyze the water.

Therefore, it can be concluded that the motor vehicle with thermal electric power generator 200 comprises the thermal electric power generator 100, which stably supplies the electric power generated by using the waste heat produced by the engine 50 to the motor vehicle with thermal electric power generator 200.

The motor vehicle with thermal electric power generator 200, among others, can use, as fuel of the engine 50, the hydrogen and oxygen obtained by the electrolyzer 60 which uses the electric power generated by the thermal electric power generator 100 to electrolyze the water, allowing a highly efficient energy conversion. The motor vehicle with thermal electric power generator 200 can use the electric energy generated by the thermal electric power generator 100 as at least a part of driving energy for driving the engine 50.

The motor vehicle with thermal electric power generator 200 can purify the water produced by the hydrogen combustion in the engine 50 to thereby transfer the purified water to the reaction vessel 61 of the electrolyzer 60. The water produced by the hydrogen combustion can be again electrolyzed to produce hydrogen and oxygen to be reused as fuel. Therefore, the motor vehicle with thermal electric power generator 200 makes effective use of water for fuel.

### [ second embodiment ]

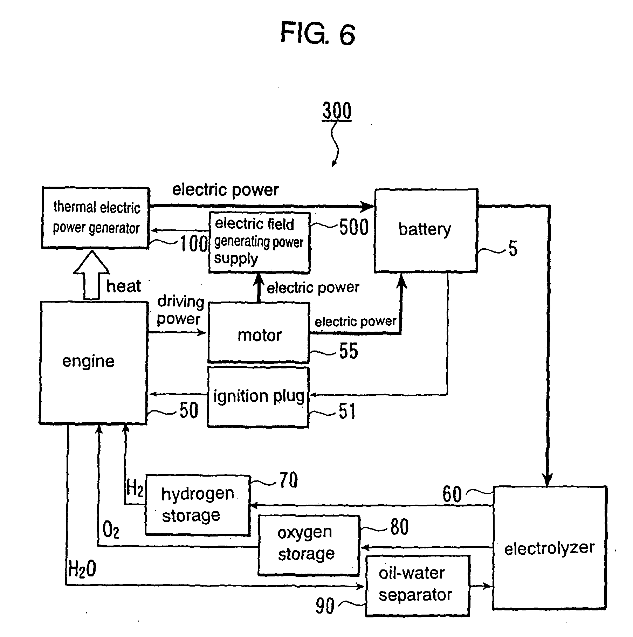

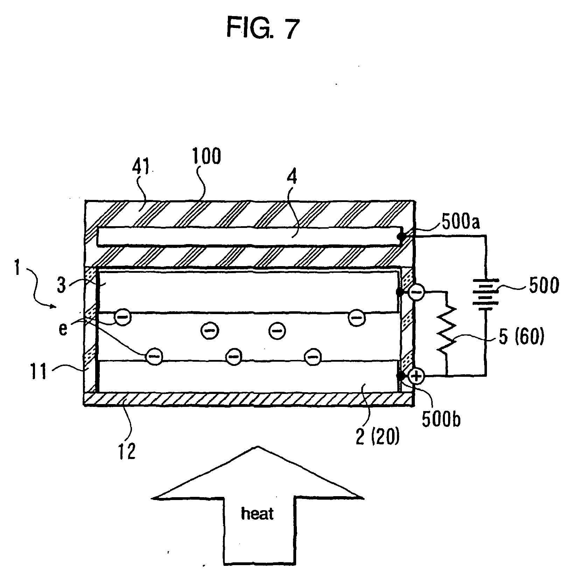

A second embodiment of the motor vehicle with thermal electric power generator in accordance with the present invention is described in greater details with reference to Fig. 6 and Fig. 7. The same reference numerals are used for the same elements as those in the first embodiment, and only the different elements are described in detail.

As shown in Fig. 6 and Fig. 7, the motor vehicle with thermal electric power generator 300 comprises an engine 50 for outputting driving force to the driving unit not shown in the figure of the motor vehicle with thermal electric power generator 300, a thermal electric power generator 100 attached to the surface of the outer wall surface of the engine 50, an electric field generator power supply 500 for generating an electric field in the thermal electric power generator 100, a battery 5 for storing the electric power generated by the thermal electric power generator 100, an electrolyzer 60 for electrolyzing the water by using the electric power stored in the battery 5, a hydrogen storage section 70 for storing hydrogen which is the fuel to be combusted in the engine 50, an oxygen storage section 80 for storing oxygen for combusting hydrogen, and an oil-water separator 90 for purifying the water generated in the engine.

The power output from the engine 50 is transmitted to a wheel driving unit not shown in the figure and to a motor 55. The motor 55 is provided in an alternator not shown in the figure, and the rotor of the motor 55 rotates in accordance with the driving power of the engine 50 to generate electric power, so as to store the electric power generated in this manner in the battery 5 or in the electric field generating power supply 500.

The electron emitter 2 and the electron accelerator 4 of the thermal electric power generator 100 are each connected to the electric field generating power supply 500, which is described hereinafter.

The electric field generating power supply 500 is a direct current voltage generator, which has a positive electrode 500a and a negative electrode 500b. The positive electrode 500a is connected to the electron accelerator 4, while the negative electrode 500b is connected to the electron emitter 2. In this configuration, the electric flux line (field) extending from the electron accelerator 4 toward the electron emitter 2 is produced.

The electron accelerator 4 is covered by an insulating member 41 and is electrically insulated from any other conductors than the electric field generating power supply 500. Since the electron accelerator 4 is electrically insulated from the electron emitter 2, the amount of consumed electric power between the electron emitter 2 and the electron accelerator 4 is almost zero. More specifically, the electric power consumption by the electric field generating power supply 500 generating an electric field to exert Coulomb force on electrons to accelerate the electrons is almost equal to zero.

The battery 5 is a direct current voltage generator for storing electric power for operating the electric system not shown in the figure of the motor vehicle with thermal electric power generator 300.

The battery 5 may be a lead battery, comprising a battery container, dilute sulfuric acid (H₂SO₄) used as the electrolytic solution to be contained in the container, lead (P_{b}) rod as the negative electrode, lead oxide (P_{b}O₂) rod as the positive electrode and the like.

The negative electrode of the battery 5 is connected to the negative electrode 62 of the electrolyzer 60, and the positive electrode of the battery 5 is connected to the positive electrode 63 of the electrolyzer 60.

When the battery 5 supplies the electric power needed to electrolyze the water in the electrolyzer 60, the negative electrode and the positive electrode react as equation (4) and equation (5), respectively, to discharge:

**P**_{**b**} **+ SO**_{**4**}^{**2-**} **→ P**_{**b**}**SO**_{**4**} **+ 2e**^{**-**} **(4)**

**P**_{**b**}**O**_{**2**} **+ 4H**^{**+**} **+ SO**_{**4**}^{**2-**} **+ 2e**^{**-**} **→ P**_{**b**}**SO**_{**4**} **+ 2H**_{**2**}**O** **(5)**

The electric power discharged by the battery 5 electrolyzes the water in the electrolyzer 60 to produce hydrogen and oxygen, in a manner similar to the first embodiment.

In case where the discharge exceeds the stored electricity amount (charged amount) in the battery 5, the electric power can be supplied directly to the electrolyzer 60 from the thermal electric power generator 100.

The electron collector 3 in the thermal electric power generator 100 is connected to the negative electrode of the battery 5, and the electron emitter 2 is connected to the positive electrode of the battery 5, and whereby the electric power generated by the thermal electric power generator 100 can be accumulated (stored) in the battery 5.

When charging the battery 5, a counterreaction opposite to the discharge reaction as cited above is evoked in the negative electrode and the positive electrode of the battery 5 to charge the battery 5.

As can be seen, the motor vehicle with thermal electric power generator 300 has the thermal electric power generator 100 attached to the engine 50, so that the motor vehicle with thermal electric power generator 300 can charge the battery 5 with the electric power generated by the thermal electric power generator 100 which uses the waste heat produced by the engine 50 driving to run the motor vehicle with thermal electric power generator 300.

The waste heat of the engine 50 which generates heat when the motor vehicle with thermal electric power generator 300 runs is stably conducted to the thermal electric power generator 100. The thermal electric power generator 100, in turn, converts the thermal energy of the waste heat into the electric energy to generate the electric power, which is stably supplied by the thermal electric power generator 100 to the motor vehicle with thermal electric power generator 300.

Then the electric power generated and charged in the battery 5 by thermal electric power generator 100,can be used to operate the electric system not shown in the figure of the motor vehicle with thermal electric power generator 300. More specifically, the motor vehicle with thermal generator 300 can use the electric energy generated by the thermal electric power generator 100 as at least a part of electric energy for operating the electric system of the motor vehicle with thermal electric power generator 300.

The motor vehicle with thermal electric power generator 300 can cause the electrolyzer 60 to operate by using the electric power charged in the battery 5 and can cause the hydrogen and oxygen obtained by electrolyzing the water by the electrolyzer 60 as the fuel of the engine 50.

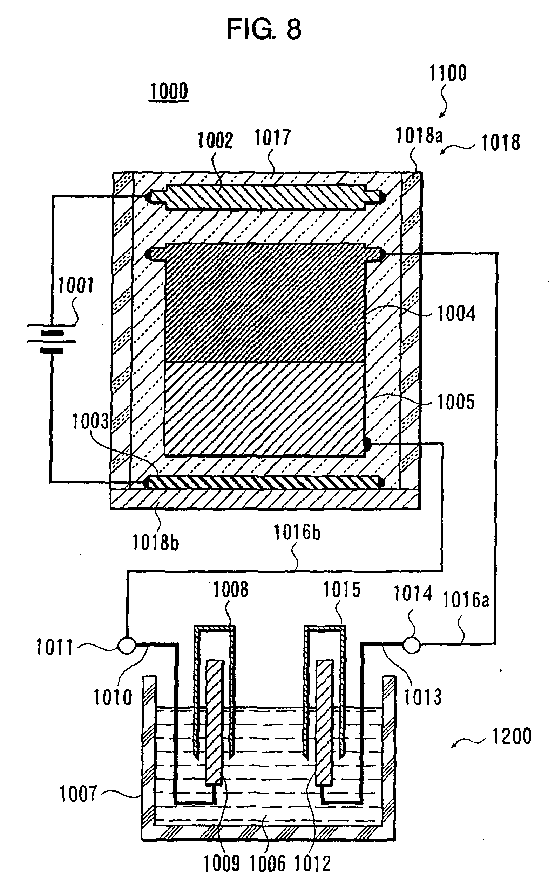

Some modifications of the thermal electric power generator 100 and the electrolyzer 60 incorporated in the motor vehicle with thermal electric power generator in accordance with the present invention are described in greater details herein below with reference to Fig. 8 through Fig. 27.

In the following modifications, the thermal electric power generator and electrolyzer are described as a hydrogen producer, which is a combination of the thermal electric power generator and the electrolyzer.

### [ First Modified Example ]

As shown in Fig. 8, a hydrogen producer 1000 comprises a thermal electric power generator 1100 and an electrolyzer 1200.

The thermal electric power generator 1100 comprises a thermal electric power generating vessel 1018, an electron emitter 1005 which is an electron emission member, installed in the thermal electric power generating vessel 1018 for emitting electrons present inside thereof when its temperature rises by being heated, and a electron collecting electrode 1004 which is an electron collector for collecting the electrons emitted from the electron emitting electrode 1005. The opposing sides of the electron collecting electrode 1004 and the electron emitter 1005 are joined.

An electrostatic field applying positive electrode 1002 as the electron accelerator is installed spaced apart from the surface of the electron collecting electrode 1004 and opposite to the electron emitting electrode 1005, an electrostatic field applying negative electrode 1003 is disposed spaced apart from the surface of the electron emitting electrode 1005 and opposite to the electron collecting electrode 1004. The electrostatic field applying positive electrode 1002 and the electrostatic field applying negative electrode 1003 are both connected to an electrostatic field generating power supply 1001, an electric field generating power supply. The electrostatic field applying positive electrode 1002 is connected to the positive electrode of the electrostatic field generating power supply 1001, and the electrostatic field applying negative electrode 1003 is connected to the negative terminal of the electrostatic field generating power supply 1001.

The thermal electric power generating vessel 1018 is filled with an insulating member 1017.

The thermal electric power generating vessel 1018 includes an outer frame member 1018a having an internal space therewithin and a heat conductive member 1018b disposed on one side of the outer frame member 1018a. The outer frame member 1018a is made of a thermally and electrically insulating material. The heat conductive member 1018b is made of a material having a high heat conductivity.

The thermal electric power generator 1100 is mounted with the heat conductive member 1018b being in contact with the outer wall surface of the engine 50.

The electron emitting electrode 1005 emits the electrons in the electric field. As for the electron emitting electrode 1005, as shown in Fig. 4 (a), an electrode 20 having a plurality of carbon nanotubes 22 planted quasi-vertically on a conductive substrate 21 can be used.

The electron collecting electrode 1004 is a member for absorbing and collecting the electrons emitted from the electron emitting electrode 1005 in the thermal electric power generating vessel 1018 . The electron collecting electrode 1004 may be made of a conductive material having a low electric resistance, such as gold, silver, nickel and the like. The electron collecting electrode 1004 may also be made of a conductive organic compound. The electron collecting electrode 1004 made of a conductive organic compound can be made thinner, lighter, more workable, and to have a higher melting point.

The electrolyzer 1200 comprises an electrolysis vessel 1007 for storing a solution such as water containing hydrogen ions 1006, a negative ion collecting electrode 1009, which is a positive electrode, disposed in the electrolysis vessel 1007, a positive ion collecting electrode 1012, which is a negative electrode, disposed in the electrolysis vessel 1007, an oxygen collector 1008 for collecting gas such as oxygen produced by the negative ion collecting electrode 1009, a hydrogen collector 1015 for collecting hydrogen gas produced by the positive ion collecting electrode 1012, a negative ion collecting wire 1010 having a negative ion collecting terminal 1011 at one end thereof and being connected to the negative ion collecting electrode 1009 at the other end, and a positive ion collecting wire 1013 having a positive ion collecting terminal 1014 at one end and being connected to the positive ion collecting electrode 1012.

For example, a carbon rod can be used for the negative ion collecting electrode 1009 and the positive ion collecting electrode 1012.

The electron collecting electrode 1004 of the thermal electric power generator 1100 is connected to the positive ion collecting terminal 1014 of the electrolyzer 1200 through a charge neutralizing wire 1016a. The electron emitting electrode 1005 of the thermal electric power generator 1100 is connected to the negative ion collecting terminal 1011 of the electrolyzer 1200 through a charge neutralizing wire 1016b.

In the hydrogen producer 1000 as have been described above, the electrostatic field generating power supply 1001 of the thermal electric power generator 1100 applies a voltage between the electrostatic field applying positive electrode 1002 and the electrostatic field applying negative electrode 1003 to generate an electrostatic field, causing an electrostatic induction phenomenon to thereby migrate the electrons to the surface of the electron emitting electrode 1005 (on the side of the electrostatic field applying positive electrode 1002).

When the thermal energy produced by the engine 50 is conducted through the heat conductive member 1018b to the electron emitting electrode 1005, the electrons present in the electron emitting electrode 1005 obtain the thermal energy, causing an electric field drift, so that the electrons migrate to the electron collecting electrode 1004. In brief, the electron emitting electrode 1005 emits electrons. The electron collecting electrode 1004 collects the electrons emitted in this manner, and is negatively charged due to the electrons collected in this manner. On the other hand, the electron emitting electrode 1005 is positively charged.

Since the electron collecting electrode 1004 and the positive ion collecting electrode 1012 are connected to each other via the charge neutralizing wire 1016a, the electrons are supplied from the electron collecting electrode 1004 through the charge neutralizing wire 1016a to the positive ion collecting electrode 1012. On the surface of the positive ion collecting electrode 1012, the electrons react with the hydrogen ions (H⁺) dissolved in the solution containing hydrogen ions to produce hydrogen gas. The produced hydrogen gas is collected by a hydrogen collector 1015, and transferred to a predetermined storage.

Negative ion (for example, oxygen ions O²⁻) contained in the solution containing hydrogen ions react so as to supply electrons to the negative ion collecting electrode 1009, and the gas (for example, oxygen gas) derived from the negative ion is produced on the surface of the negative ion collecting electrode 1009. The produced gas is collected by the oxygen collector 1008 to be transferred to a predetermined storage. Since the electron emitting electrode 1005 and the negative ion collecting electrode 1009 are connected to each other via the charge neutralizing wire 1016b, the electrons supplied to the negative ion collecting electrode 1009 are supplied through the wire 1016b to the electron emitting electrode 1005.

By electrically connecting the thermal electric power generator 1100 and the electrolyzer 1200 through the charge neutralizing wires 1016a and 1016b, the electrons collected by the electron collecting electrode 1004 can be supplied to the positive ion collecting electrode 1012, while the electrons supplied to the negative ion collecting electrode 1009 can be supplied to the electron emitting electrode 1005. This shows that the thermal electric power generator 1100 and the electrolyzer 1200 can be electrically neutralized.

In the process during which the thermal electric power generator 1100 and the electrolyzer 1200 are electrically neutralized, hydrogen gas can be produced at the positive ion collecting electrode 1012 of the electrolyzer 1200. In other words, the hydrogen producer 1000 can produce hydrogen gas.

As can be appreciated from the foregoing description, in the hydrogen producer 1000, the thermal electric power generator 1100 generates electric power (generation and supply of electrons) using the heat generated by the engine 50, and the electrolyzer 1200 can produce hydrogen gas by using the electric power generated by the thermal electric power generator 1100 produces hydrogen gas.

The hydrogen producer 1000, which can produce hydrogen gas, can supply the hydrogen gas produced in this manner to the engine 50 of the motor vehicle with thermal electric power generator as fuel.

The hydrogen producer 1000 in this configuration can also generate thermal electric power, and can generate and supply hydrogen when it is installed in a motor vehicle with thermal electric power generator.

It is conceivable that an N-type semiconductor, which tends to be electron-excessive, may be used as the electron emitting electrode 1005, while a P-type semiconductor, which tends to be electron-depleted, may be used as the electron collecting electrode 1004. It should be noted that the semiconductor does not need to be silicon-based, and may be formed of carbon nanotubes.

### [ Second Modified Example ]

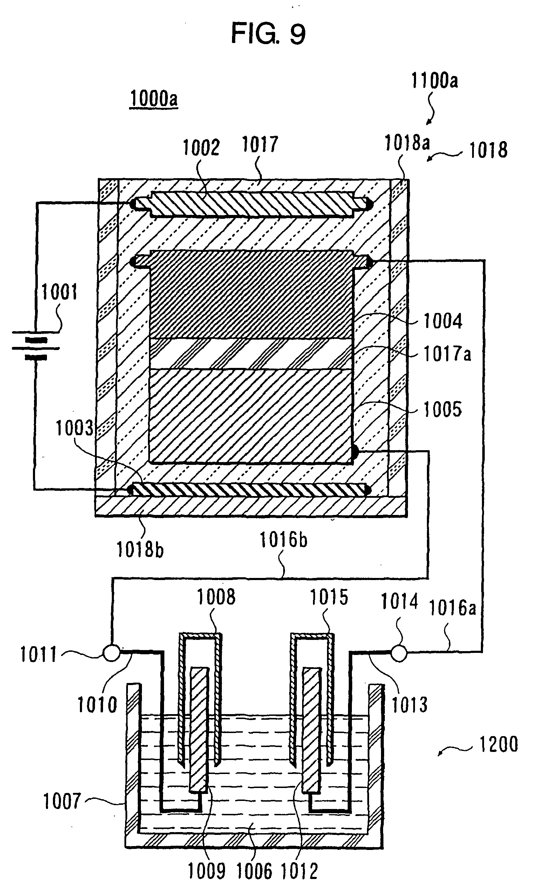

Now the second modified example of the hydrogen producer comprising a thermal electric power generator and an electrolyzer in accordance with the present invention is described in greater details herein below with reference to Fig. 9. The same reference numerals are used for the same elements as those of the first modified example, and only the different elements are described in detail.

As shown in Fig. 9, the hydrogen producer 1000a comprises a thermal electric power generator 1100a and a electrolyzer 1200a.

In the thermal electric power generator 1100a, an insulating member 1017a is provided between an electron collecting electrode 1004 and an electron emitting electrode 1005.

The insulating member 1017a provides an internal discharge (internal short) where the electrons migrated from the electron emitting electrode 1005 to the electron collecting electrode 1004 are prevented from returning back to the electron emitting electrode 1005 (internal discharge).

Since the insulating member 1017a is a very thin insulating material, the electrons migrating from the electron emitting electrode 1005 to the electron collecting electrode 1004 can pass through the insulating member 1017a due to the Tunneling Effect.

In the hydrogen producer 1000a as has been described above, since the electrons emitted from the electron emitting electrode 1005 reaches the electron collecting electrode 1004 after passing through the insulating member 1017a. This means that hydrogen producer 1000a can also produce hydrogen gas similarly to the hydrogen producer 1000. The hydrogen gas produced in this manner, as can be appreciated, can be supplied to the engine 50 of the motor vehicle with thermal electric power generator as fuel.

The hydrogen producer 1000a having the configuration as has been described above can also generate thermal electric power and can produce and supply hydrogen when it is installed in a motor vehicle with thermal electric power generator.

### [ Third Modified Example ]

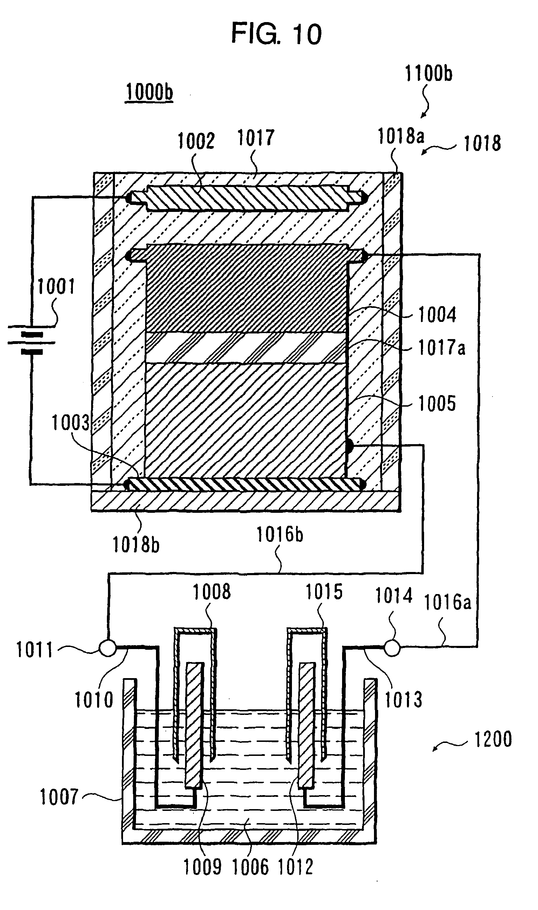

Now the third modified example of the hydrogen producer comprising a thermal electric power generator and an electrolyzer is described in greater details herein below with reference to Fig. 10. The same reference numerals are used for the same elements as those of the first and second modified examples, and only the different elements are described in detail.

As shown in Fig. 10, the hydrogen producer 1000b comprises a thermal electric power generator 1100b and an electrolyzer 1200.

The electron emitting electrode 1005 in the thermal electric power generator 1100b is electrically connected to an electrostatic field applying negative electrode 1003. As the result, electron emission is facilitated because the electric field produced by the electrostatic field generating power supply 1001 between the electrostatic field applying positive electrode 1002 and the electrostatic field applying negative electrode 1003 is enforced.

The hydrogen producer 1000b can produce hydrogen gas similarly to the hydrogen producer 1000, so that the hydrogen gas produced in this manner can be supplied to the engine 50 of the motor vehicle with thermal electric power generator as fuel.

The hydrogen producer 1000b having the configuration as has been described above can also generate thermal electric power and can produce and supply hydrogen when it is installed in a motor vehicle with thermal electric power generator.

### [ Fourth Modified Example ]

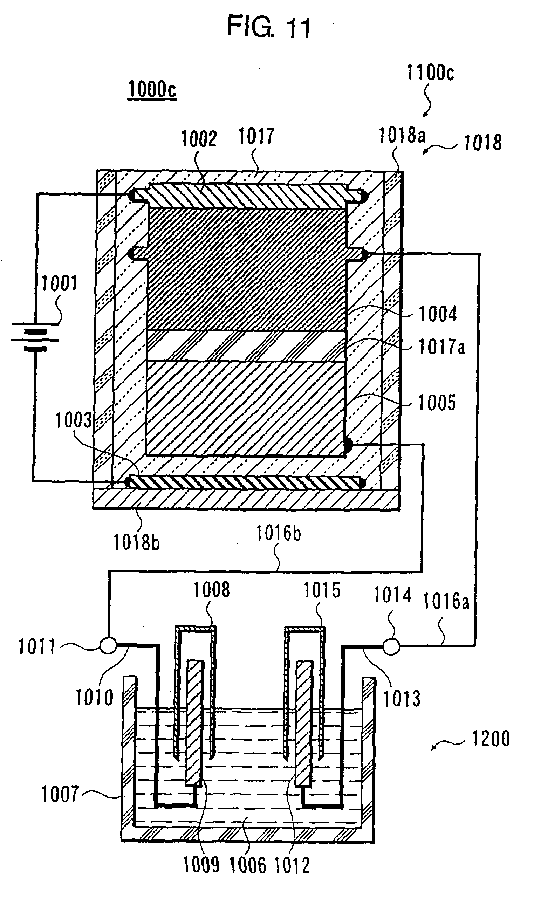

Now the fourth modified example of the hydrogen producer comprising a thermal electric power generator and an electrolyzer is described in greater details herein below with reference to Fig. 11. The same reference numerals are used for the same elements as those of the first and second modified examples, and only the different elements are described in detail.

As shown in Fig. 11, the hydrogen producer 1000c comprises a thermal electric power generator 1100c and an electrolyzer 1200.

The electron collecting electrode 1004 in the thermal electric power generator 1100c is electrically connected to the electrostatic field applying positive electrode 1002. As the result, the electron emission is facilitated because the electric field produced by the electrostatic field generating power supply 1001 between the electrostatic field applying positive electrode 1002 and the electrostatic field applying negative electrode 1003 is enforced.

The hydrogen producer 1000c can also produce hydrogen gas similarly to the hydrogen producer 1000, so that the hydrogen gas produced in this manner can be supplied to the engine 50 of the motor vehicle with thermal electric power generator as fuel.

The hydrogen producer 1000c having the configuration as has been described above can also generate thermal electric power and can produce and supply hydrogen when it is installed in a motor vehicle with the thermal electric power generator.

### [ Fifth Modified Example ]

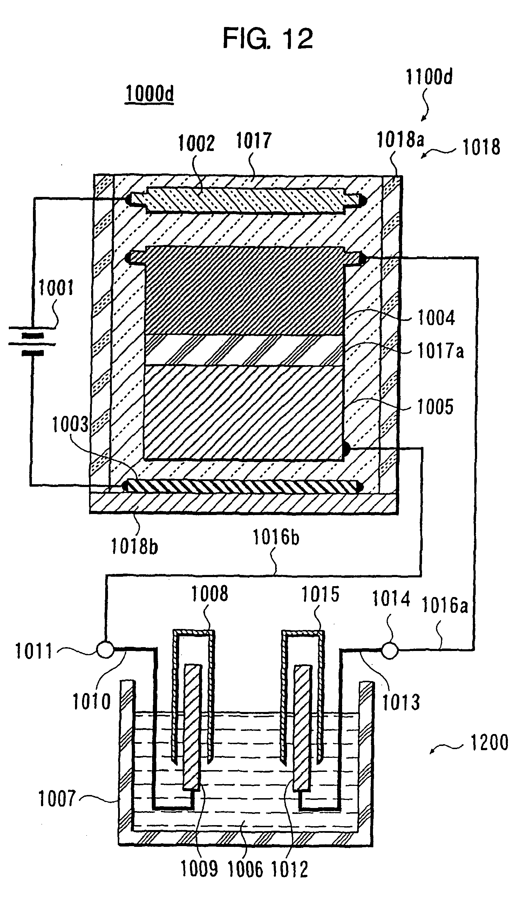

Now the fifth modified example of the hydrogen producer comprising a thermal electric power generator and an electrolyzer is described in greater details herein below with reference to Fig. 12. The same reference numerals are used for the same elements as those of the first and second modified examples, and only the different elements are described in detail.

As shown in Fig. 12, the hydrogen producer 1000d comprises a thermal electric power generator 1100d and an electrolyzer 1200.

The electrostatic field applying positive electrode 1002 in the thermal electric power generator 1100d is made of a material having a light transmitting property (for example, a light transmittable, electrically conductive resin). The insulating member 1017 is also made of an insulation material having a light transmitting property.

The hydrogen producer 1000d in this configuration facilitates the thermal energy derived from the light energy such as sunlight to be transferred to the electron emitting electrode 1005.

The hydrogen producer 1000d can also produce hydrogen gas similarly to the hydrogen producer 1000, so that the hydrogen gas produced in this manner can be supplied to the engine 50 of the motor vehicle with thermal electric power generator as fuel.

The hydrogen producer 1000d having the configuration as has been described above can generate thermal electric power and can produce and supply hydrogen when it is installed in a motor vehicle with thermal electric power generator.

### [ Sixth Modified Example ]

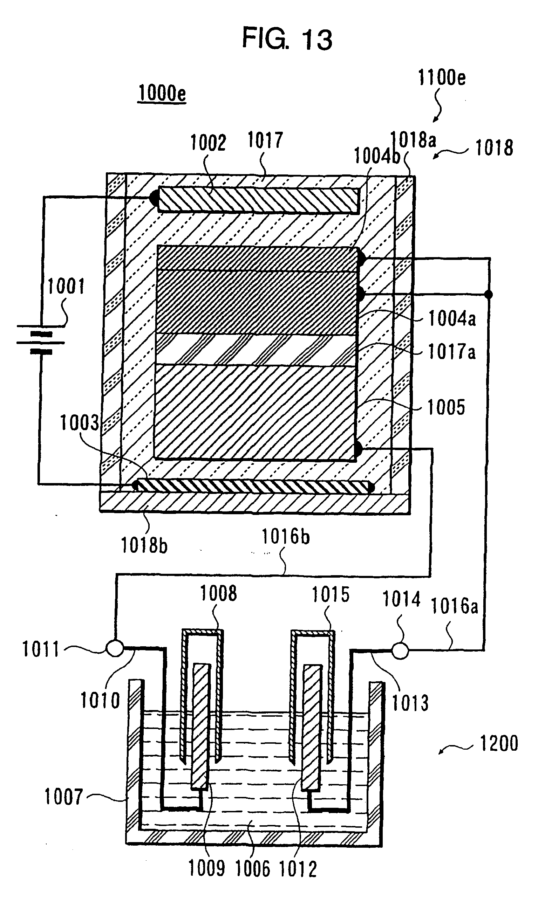

Now the sixth modified example of the hydrogen producer comprising a thermal electric power generator and an electrolyzer is described in greater details herein below with reference to Fig. 13. The same reference numerals are used for the same elements as those of the first and second modified examples, and only the different elements are described in detail.

As shown in Fig. 13, the hydrogen producer 1000e comprises a thermal electric power generator 1100e and an electrolyzer 1200.

The electron collecting electrode 1004 in the thermal electric power generator 1100e comprises a main electron collecting electrode 1004a and an auxiliary electron collecting electrode 1004b.

In the hydrogen producer 1000e in this configuration, any electrons that the main electron collecting electrode 1004a has failed to collect can be collected by the auxiliary electron collecting electrode 1004b, so that the electrons can be effectively collected.

The main electron collecting electrode 1004a may be made of a P-type semiconductor and the auxiliary electron collecting electrode 1004b may be made of a conductive material (such as a metal).

The hydrogen producer 1000e can also produce hydrogen gas similarly to the hydrogen producer 1000, so that the hydrogen gas produced in this manner can be supplied to the engine 50 of the motor vehicle with thermal electric power generator as fuel.

The hydrogen producer 1000e having the configuration as has been described above can also generate thermal electric power and can produce and supply hydrogen when it is installed in a motor vehicle with thermal electric power generator.

### [ Seventh Modified Example ]

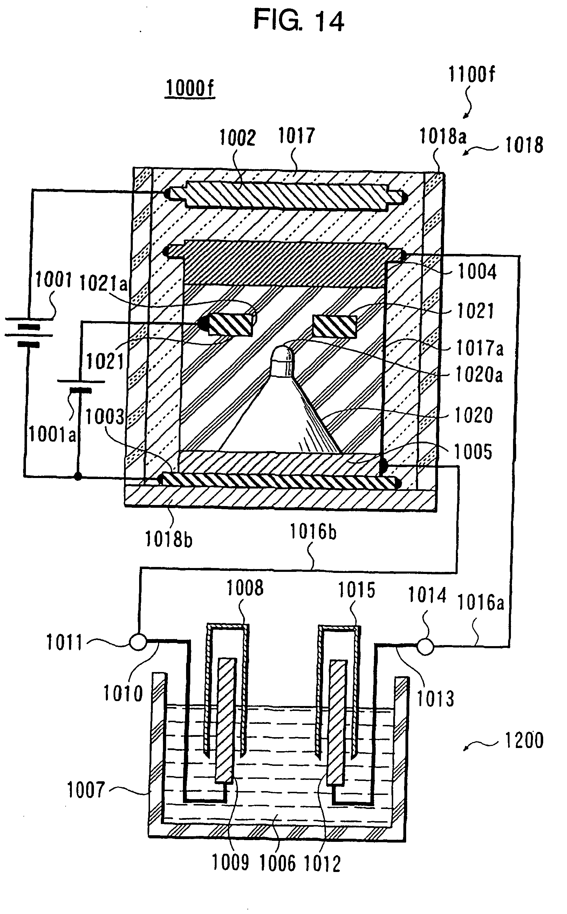

Now the seventh modified example of the hydrogen producer comprising a thermal electric power generator and an electrolyzer is described in greater details herein below with reference to Fig. 14. The same reference numerals are used for the same elements as those of the first and second modified examples, and only the different elements are described in detail.

As shown in Fig. 14, the hydrogen producer 1000f comprises a thermal electric power generator 1100f and an electrolyzer 1200.

The electron emitting electrode 1005 in the thermal electric power generator 1100f, is electrically connected to the electrostatic field applying negative electrode 1003. A generally conical cathode 1020 holding carbon nanotubes on its tip portion 1020a is provided on the electron emitting electrode 1005 on the side facing the electron collecting electrode 1004.

The cathode 1020 is made of a conductive substance which is obtained by doping impurities in silicon, for example. The tip portion 1020a is formed of a conductive substance with carbon nanotubes being planted, and is electrically connected to the cathode 1020.

An auxiliary electrostatic field applying positive electrode 1021 is disposed between the electron collecting electrode 1004 and the cathode 1020. The auxiliary electrostatic field applying positive electrode 1021 is electrically connected to the positive terminal of an auxiliary electrostatic field generating power supply 1001a. The negative terminal of the auxiliary electrostatic field generating power supply 1001a is connected to the electrostatic field applying negative electrode 1003.

The auxiliary electrostatic field applying positive electrode 1021 has an opening 1021a formed at a location corresponding to the tip portion 1020a of the cathode 1020.

The hydrogen producer 1000f in this configuration allows the electron emission at a higher efficiency because the electrons to be emitted by the carbon nanotubes on the tip portion 1020a of the cathode 1020, in addition to the electrons emitted from the electron emitting electrode 1005, are emitted intensively toward the electron collecting electrode 1004 from the tip portion 1020a.

The electrostatic induction phenomenon by the auxiliary electrostatic field applying positive electrode 1021 additionally facilitates the electron emission even under a low electrostatic field applying voltage.

The auxiliary electrostatic field applying positive electrode 1021 is covered by an insulating member 1017a so that few electrons can reach the auxiliary electrostatic field applying positive electrode 1021.

The hydrogen producer 1000f can also produce hydrogen gas similarly to the hydrogen producer 1000, so that the hydrogen gas produced in this manner can be supplied to the engine 50 of the motor vehicle with thermal electric power generator as fuel.

The hydrogen producer 1000f having the configuration as has been described above can also generate thermal electric power and can produce and supply hydrogen when it is installed in a motor vehicle with thermal electric power generator.

In the hydrogen producer 1000f, since the carbon nanotubes are held on the tip portion 1020a of the cathode 1020, the electron emitting electrode 1005 may be an electrode made of a conductive substance instead of an electrode having carbon nanotubes planted thereon.

### [ Eighth Modified Example ]

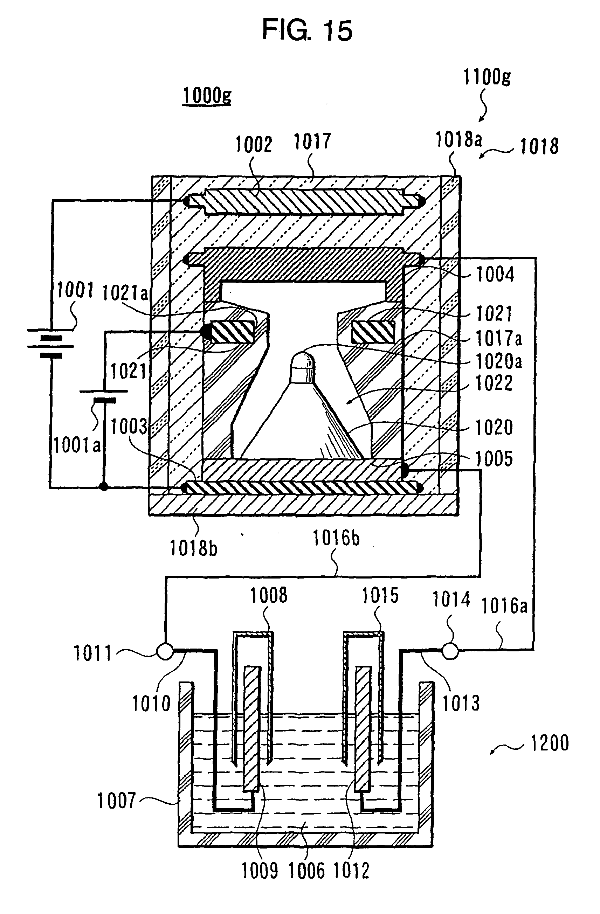

Now the eighth modified example of the hydrogen producer comprising a thermal electric power generator and an electrolyzer is described in greater details herein below with reference to Fig. 15. The same reference numerals are used for the same elements as those of the first, second and seventh modified examples, and only the different elements are described in detail.

As shown in Fig. 15, the hydrogen producer 1000g comprises a thermal electric power generator 1100g and an electrolyzer 1200.

As shown in Fig. 15, the thermal electric power generator 1100g has an internal space 1022, which is a space for electron emission, between the electron collecting electrode 1004 and the cathode 1020. The internal space 1022 is preferably kept under vacuum. The electrons emitted from the tip portion 1020a of the cathode 1020 fly through the internal space 1022 to reach the electron collecting electrode 1004.

The hydrogen producer 1000g can also produce hydrogen gas similarly to the hydrogen producer 1000 or 1000f, so that the hydrogen gas produced in this manner can be supplied to the engine 50 of the motor vehicle with thermal electric power generator as fuel.

The hydrogen producer 1000g having the configuration as has been described above can also generate thermal electric power and can produce and supply hydrogen when it is installed in a motor vehicle with thermal electric power generator.

### [ Ninth Modified Example ]

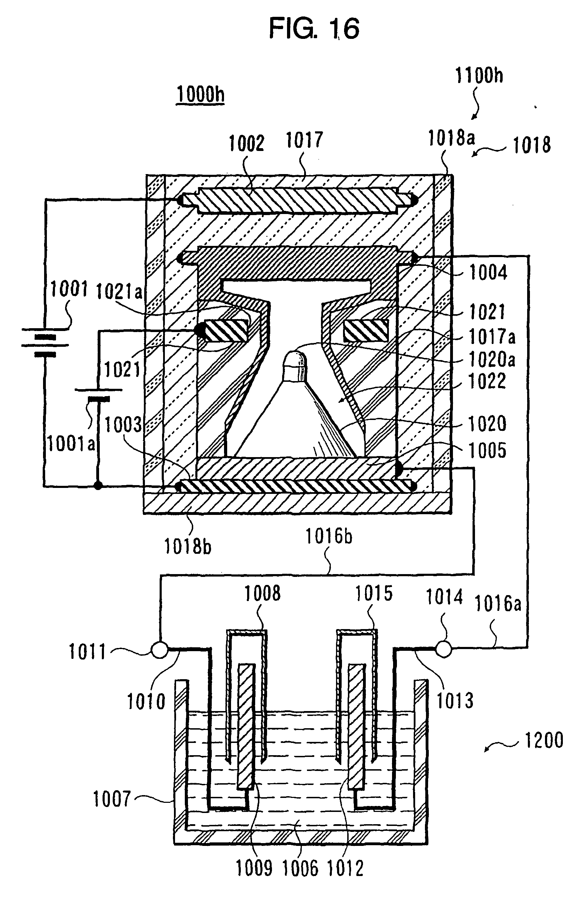

Now the ninth modified example of the hydrogen producer comprising a thermal electric power generator and an electrolyzer is described in greater details herein below with reference to Fig. 16. The same reference numerals are used for the same elements as those of the first, second, seventh and eighth modified examples, and only the different elements are described in detail.

As shown in Fig. 16, the hydrogen producer 1000h comprises a thermal electric power generator 1100h and an electrolyzer 1200.

As shown in Fig. 16, the thermal electric power generator 1100h has an internal space 1022 formed between the electron collecting electrode 1004 and the cathode 1020. The electron collecting electrode 1004 extends to the vicinity of the electron emitting electrode 1005 along the inner wall surface of the internal space 1022. The electron collecting electrode 1004 thereby can sufficiently collect the electrons scattered during frying through the internal space 1022.

Because the extended part of the electron collecting electrode 1004 is formed sufficiently thin, the electric field generated by the auxiliary electrostatic field applying positive electrode 1021 reaches the carbon nanotubes on the tip portion 1020a of the cathode 1020, so that the electrons are suitably emitted from the tip portion 1020a.

The hydrogen producer 1000h can produce hydrogen gas similarly to the hydrogen producer 1000 or 1000f or 1000g, so that the hydrogen gas produced in this manner can be supplied to the engine 50 of the motor vehicle with thermal electric power generator as fuel.

The hydrogen producer 1000h having the configuration as has been described above can also generate thermal electric power and can produce and supply hydrogen when it is installed in a motor vehicle with thermal electric power generator.

### [ Tenth Modified Example ]

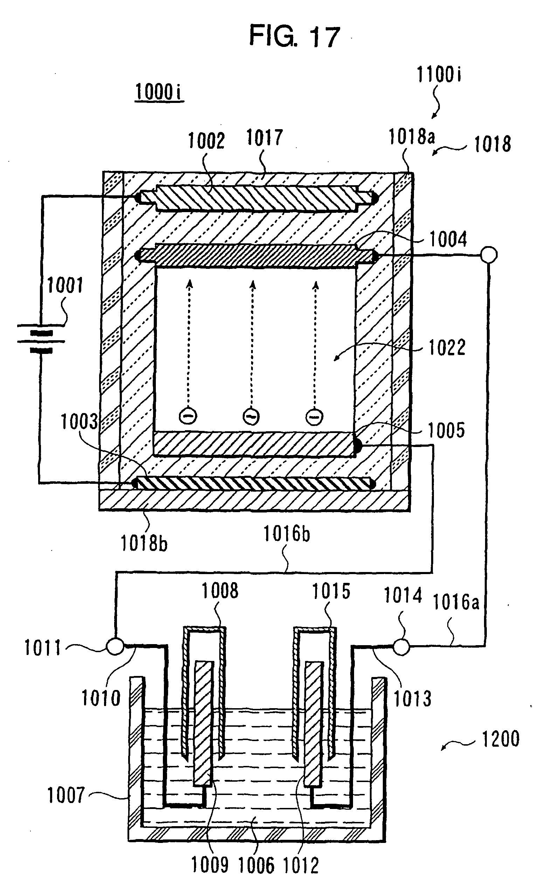

Now the tenth modified example of the hydrogen producer comprising a thermal electric power generator and an electrolyzer is described in greater details herein below with reference to Fig. 17. The same reference numerals are used for the same elements as those of the first, second, seventh and eighth modified examples, and only different elements are described in detail.

As shown in Fig. 17, the hydrogen producer 1000i comprises a thermal electric power generator 1100i and an electrolyzer 1200.

The thermal electric power generator 1100i has an internal space 1022 formed between the electron collecting electrode 1004 and the electron emitting electrode 1005. The internal space 1022 is preferably kept under vacuum.

The heat that is conducted through the heat conductive member 1018b made of a metal, for example, is conducted to the electron emitting electrode 1005 disposed in the vicinity of the heat conductive member 1018b, allowing electrons to be suitably emitted.

In the hydrogen,producer 1000i in this configuration, the electrons emitted from the electron emitting electrode 1005 fly through the internal space 1022 to reach the electron collecting electrode 1004, allowing the hydrogen producer 1000i to produce hydrogen gas similarly to the hydrogen producer 1000. The hydrogen gas produced in this manner can be supplied to the engine 50 of the motor vehicle with thermal electric power generator as fuel.

The hydrogen producer 1000i having the configuration as has been described above can also generate thermal electric power and can produce and supply hydrogen when it is installed in a motor vehicle with thermal electric power generator.

Particularly, the electrostatic field applying positive electrode 1002 and the electrostatic field applying negative electrode 1003 both being connected to the electrostatic field generating power supply 1001 are completely isolated from the circuitry comprising the electron collecting electrode 1004, the electron emitting electrode 1005, and the like. As the current supplied from the electrostatic field generating power supply 1001 does not flow through the circuitry, the consumption power of the electrostatic field generating power supply 1001 is nearly zero, allowing an ideal power generation.

### [ Eleventh Modified Example ]

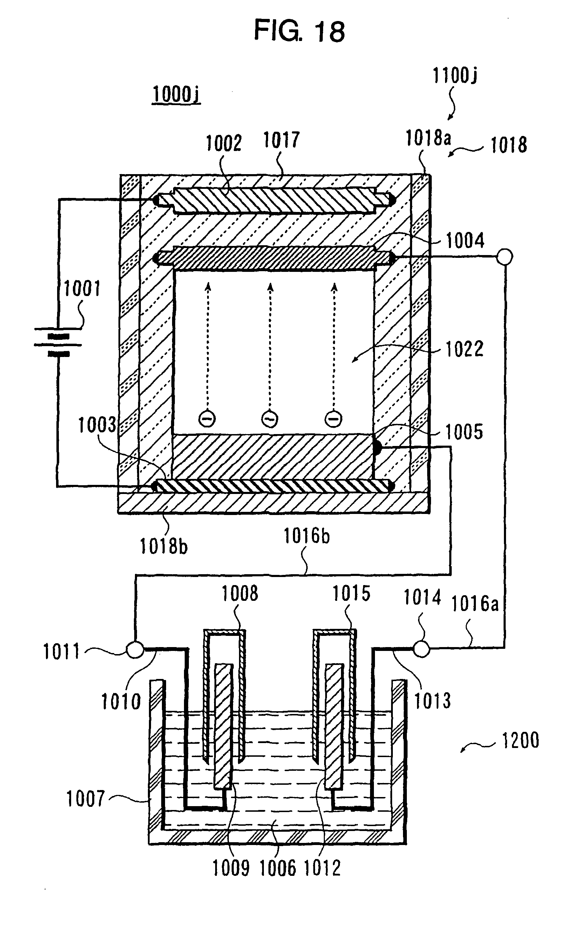

Now the eleventh modified example of the hydrogen producer comprising a thermal electric power generator and an electrolyzer is described in greater details herein below with reference to Fig. 18. The same reference numerals are used for the same elements as those of the first and tenth modified examples, and only the different elements are described in detail.

As shown in Fig. 18, the hydrogen producer 1000j comprises a thermal electric power generator 1100j and an electrolyzer 1200.

The electron emitting electrode 1005 in the thermal electric power generator 1100j is thermally connected to the electrostatic field applying negative electrode 1003.

The heat emerged from a heat source is conducted through the heat conducting member 1018b to the electrostatic field applying negative electrode 1003, and then is further conducted to the electron emitting electrode 1005. As can be seen, the electron emitting electrode 1005 is thermally connected to the heat conducting member 1018b so that the emission efficiency of electrons from the electron emitting electrode 1005 are enhanced.

The hydrogen producer 1000j can also produce hydrogen gas similarly to the hydrogen producer 1000 or 1000i, so that the hydrogen gas produced in this manner can be supplied to the engine 50 of the motor vehicle with thermal electric power generator as fuel.

The hydrogen producer 1000j having the configuration as has been described above can also generate thermal electric power and can produce and supply hydrogen when it is installed in a motor vehicle with thermal electric power generator.

### [ Twelfth Modified Example ]

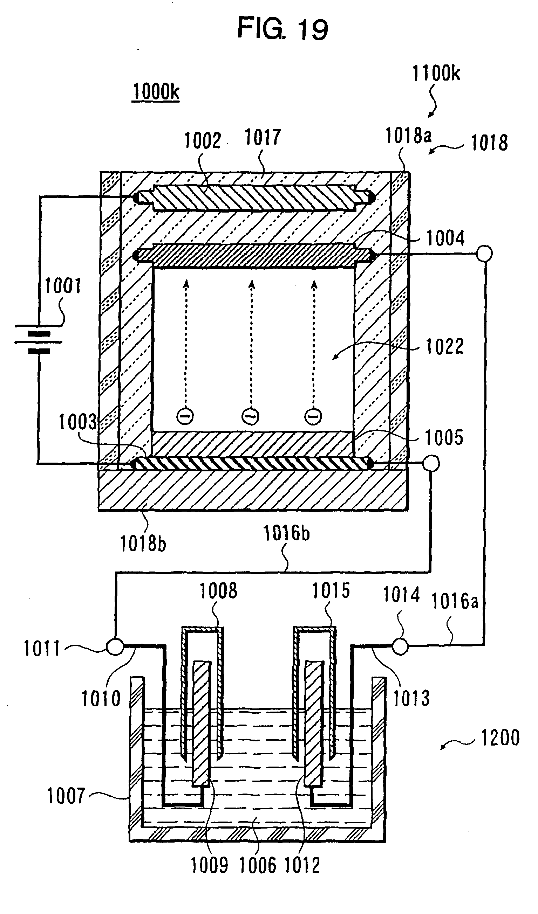

Now the twelfth modified example of the hydrogen producer comprising a thermal electric power generator and an electrolyzer is described in greater details herein below with reference to Fig. 19. The same reference numerals are used for the same elements as those of the first and tenth modified examples, and only the different elements are described in detail.

As shown in Fig. 19, the hydrogen producer 1000k comprises a thermal electric power generator 1100k and an electrolyzer 1200.

The electrostatic field applying negative electrode 1003 in the thermal electric power generator 1100k is connected to the negative ion collecting terminal 1011 of the electrolyzer 1200 through the charge neutralizing wire 1016b. Namely, the electrostatic field applying negative electrode 1003 is connected to the negative ion collecting electrode 1009. The electrostatic field applying negative electrode 1003 and the electron emitting electrode 1005 are thermally connected to each other.

The heat emerging from a heat source is conducted through the heat conducting member 1018b to the electrostatic field applying negative electrode 1003, and then is further conducted to the electron emitting electrode 1005. As can be seen, the electron emitting electrode 1005 is thermally connected to the heat conducting member 1018b so that the emission efficiency of electrons from the electron emitting electrode 1005 is enhanced.

In case where the electron emitting electrode 1005 is made of carbon nanotubes, no direct electric connection is employed, and thus, the generator output is obtained from the electrostatic field applying negative electrode 1003.

The thermal electric power generator 1100k has an internal space 1022 formed between the electron collecting electrode 1004 and the electron emitting electrode 1005. The internal space 1022 is preferably kept under vacuum.

In the hydrogen producer 1000k in this configuration, the electrons emitted from the electron emitting electrode 1005 fly through the internal space 1022 to reach the electron collecting electrode 1004, allowing hydrogen gas to be produced by the hydrogen producer 1000k similarly to the hydrogen producer 1000 or 1000i. The hydrogen gas produced in this manner can be supplied to the engine 50 of the motor vehicle with thermal electric power generator as fuel.

The hydrogen producer 1000k having the configuration as has been described above can also generate thermal electric power and can produce and supply hydrogen when it is installed in a motor vehicle with thermal electric power generator.

### [ Thirteenth Modified Example ]

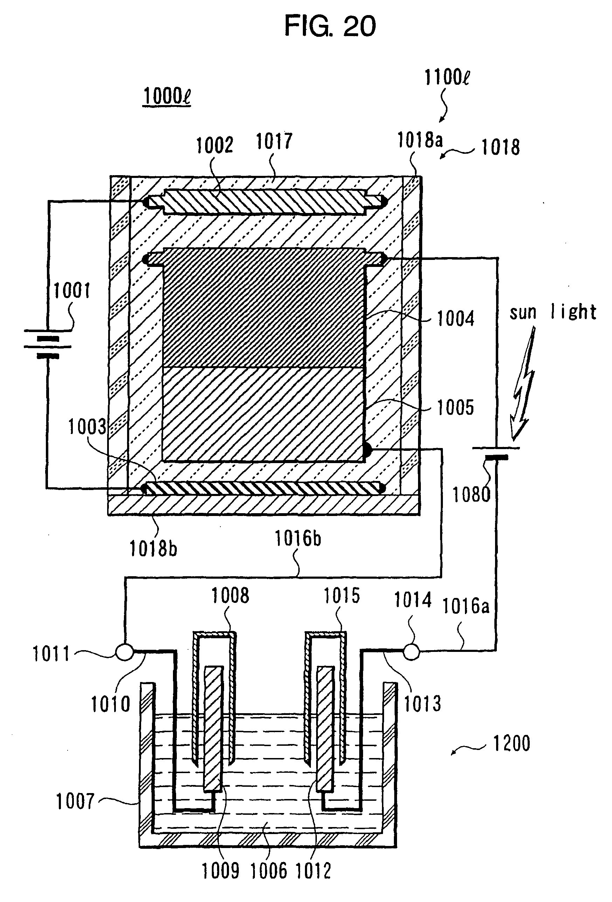

Now the thirteenth modified example of the hydrogen producer comprising a thermal electric power generator and an electrolyzer is described in greater details herein below with reference to Fig. 20. The same reference numerals are used for the same elements as those of the first modified example, and only the different elements are described in detail.

As shown in Fig. 20, the hydrogen producer 10001 comprises a thermal electric power generator 11001 and an electrolyzer 1200.

As shown in Fig. 20, the hydrogen producer 10001 is a hydrogen producer having a solar battery 1080 made of silicon as the primary material and attached to the charge neutralizing wire 1016a of the hydrogen producer 1000 shown in Fig. 8.

The positive terminal of the solar battery 1080 is connected to the electron collecting electrode 1004 of the thermal electric power generator 11001, and the negative terminal of the solar battery 1080 to the positive ion collecting electrode 1012 of the electrolyzer 1200. The solar battery 1080 is placed, for example, on the hood of the motor vehicle with thermal electric power generator, where it is easily irradiated by the sunlight. The electric power generated by the solar battery 1080 is supplied to the electrolyzer 1200 together with the electric power generated by the thermal electric power generator 11001.

When this system is adopted, a high voltage output can be obtained even with a low voltage silicon solar battery 1080. In other words, even with the current available from the solar battery 1080, a high electric power output can be obtained by boosting its voltage.

As for the electron emitting electrode 1005, a semiconductor which has a plenty of negatively charged carriers, or N-type carbon nanotubes, can be used, and an electrically conductive member can be used for the electron collecting electrode 1004. This configuration improves the power generation efficiency.

In the hydrogen producer 10001, the electric power generated by the solar battery 1080 together with the electric power generated by the thermal electric power generator 11001 is supplied to the electrolyzer 1200. The hydrogen producer 10001 can also produce hydrogen similarly to the hydrogen producer 1000, so that the hydrogen gas produced in this manner can be supplied to the engine 50 of the motor vehicle with thermal electric power generator as fuel.

The hydrogen producer 10001 having the configuration as has been described above can also generate thermal electric power and can produce and supply hydrogen when it is installed in a motor vehicle with thermal electric power generator.

### [ Fourteenth Modified Example ]

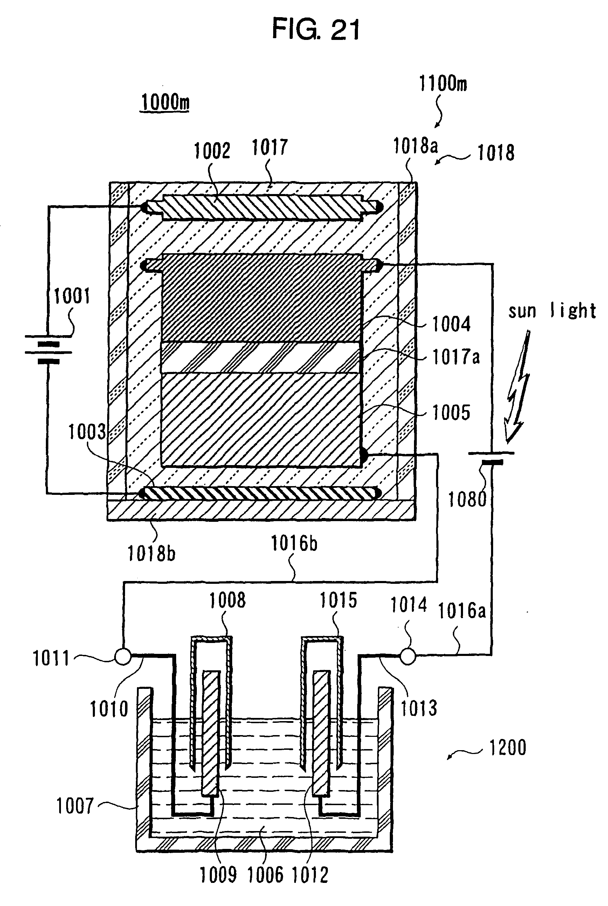

Now the fourteenth modified example of the hydrogen producer comprising a thermal electric power generator and an electrolyzer is described in greater details herein below with reference to Fig. 21. The same reference numerals are used for the same elements as those of the first, second and thirteenth modified examples, and only the different elements are described in detail.

As shown in Fig. 21, the hydrogen producer 1000m comprises a thermal electric power generator 1100m and an electrolyzer 1200.

As shown in Fig. 21, the hydrogen producer 1000m has a solar battery 1080 made of silicon as the primary material and attached to the charge neutralizing wire 1016a of the hydrogen producer 1000a shown in Fig. 9.

The positive terminal of the solar battery 1080 is connected to the electron collecting electrode 1004 of the thermal electric power generator 1100m, and the negative terminal of the solar battery 1080 to the positive ion collecting electrode 1012 of the electrolyzer 1200. The solar battery 1080 is placed, for example, on the hood of the motor vehicle with thermal electric power generator, where it is easily irradiated by the sunlight. The electric power generated by the solar battery 1080 is supplied to the electrolyzer 1200 together with the electric power generated by the thermal electric power generator 1100m.

In the hydrogen producer 1000m as shown in Fig. 21, a thin insulating member 1017a is provided between the electron collecting electrode 1004 and the electron emitting electrode 1005.

The thickness of the insulating member 1017a is in the order of several nanometers to several hundreds of nanometers. Thus, the electric field effect allows the electrons to migrate from the electron emitting electrode 1005 to the electron collecting electrode 1004 due to the Tunneling Effect.

When such an insulating member 1017a is provided, a P-type semiconductor may be used for the electron collecting electrode 1004 and an N-type semiconductor may be used for the electron emitting electrode 1005.

In the hydrogen producer 1000m in this configuration, the electric power generated by the solar battery 1080 together with the electric power generated by the thermal electric power generator 1100m is supplied to the electrolyzer 1200. Since the hydrogen producer 1000m produces hydrogen gas similarly to the hydrogen producer 1000 and 10001, so that the hydrogen gas produced in this manner can be supplied to the engine 50 of the motor vehicle with thermal electric power generator as fuel.

The hydrogen producer 1000m having the configuration as has been described above can also generate thermal electric power and can produce and supply hydrogen when it is installed in a motor vehicle with the thermal electric power generator.

### [ Fifteenth Modified Example ]

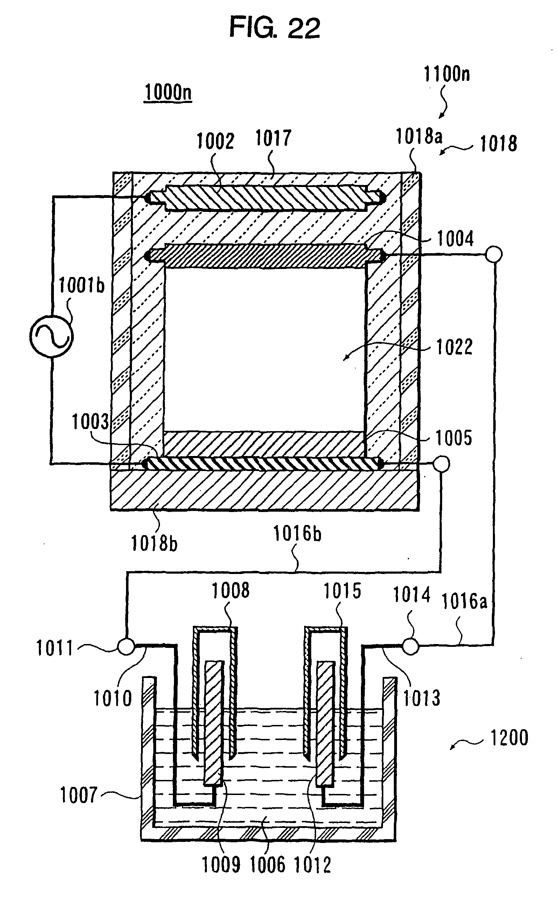

Now the fifteenth modified example of the hydrogen producer comprising a thermal electric power generator and an electrolyzer is described in greater details herein below with reference to Fig. 22 through Fig. 25. The same reference numerals are used for the same elements as those of the first and twelfth modified examples, and only the different elements are described in detail.

As shown in Fig. 22, the hydrogen producer 1000n comprises a thermal electric power generator 1100n and an electrolyzer 1200.

As shown in Fig. 22, the hydrogen producer 1000n has replaced the electrostatic field generating power supply 100l, which is a direct current source in the hydrogen producer 1000k shown in Fig. 19, with an alternating current source.

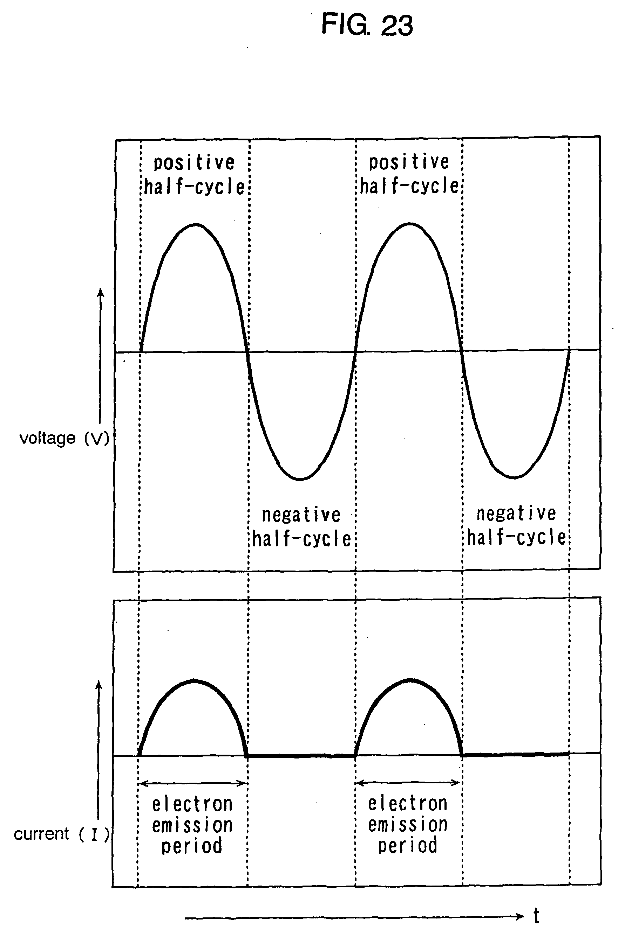

The alternate current source 1001b is a power source with the voltage (V) changing regularly to positive or negative, as shown in Fig. 23. As shown in the upper half of Fig. 23, the period of time in which the voltage (V) of the alternate current source 1001b is positive is referred to as "positive half-cycle", and the period of time in which the voltage is negative is referred to as "negative half-cycle".

The electric current value of the current (I) developed by the migration of electrons emitted from the electron emitting electrode 1005 by the field effect derived from the alternate current source 1001b is shown in the lower half of Fig. 23.

As shown in the lower half of Fig. 23, the current (I) flows only when the voltage (V) of the alternate current source 1001b is in the positive half-cycle, and does not flow during the negative half-cycle. The phenomenon that the current flow only in the positive half-cycle and that the current does not flow in the negative half-cycle is just similar to the phenomenon seen in the diode vacuum tube and is referred to as diode characteristics.

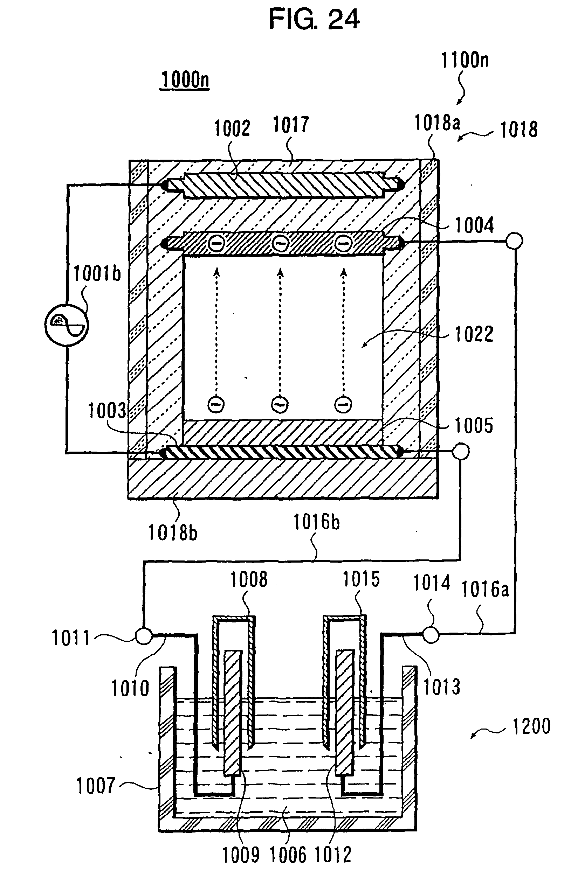

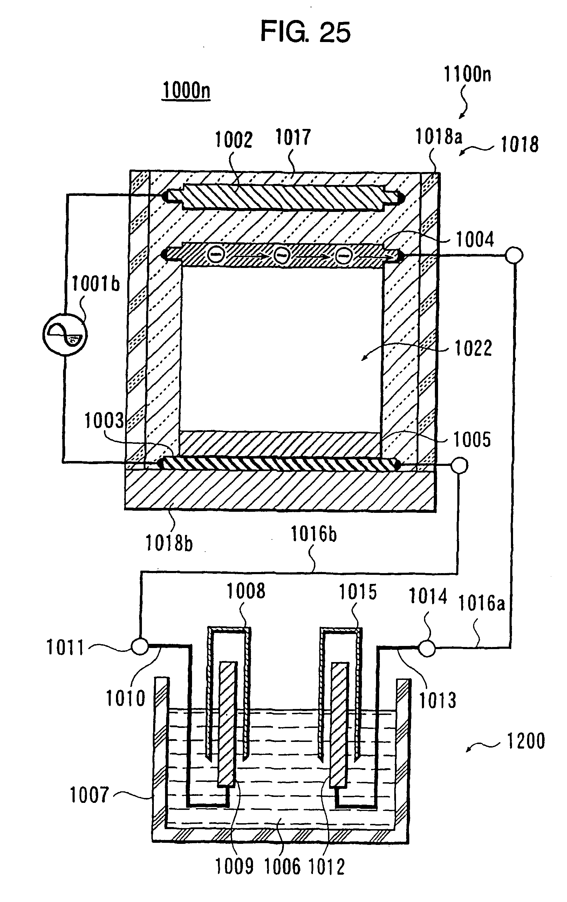

The thermal electric power generation developed in the positive half-cycle is described with reference to Fig. 24, and the thermal electric power generation developed in the negative half-cycle is described with reference to Fig. 25.

During the positive half-cycle period of the alternate current source 1001b in the thermal electric power generator 1100n (hydrogen producer 1000n) shown in Fig. 24, a positive voltage is applied to the electrostatic field applying positive electrode 1002 of the electron accelerator, and thus, the electrons are emitted from the electron emitting electrode 1005 of the electron emitter and are absorbed by the electron collecting electrode 1004, and whereby the current flows. Thereafter, in the electrolyzer 1200, electrolyzing the water produces hydrogen. However, some of emitted electrons may collide with the insulating member 1017 and may adhere thereto. The adhered electrons interfere with the field emission of electrons.

During the negative half-cycle period of the alternate current source 1001b in the thermal electric power generator 1100n (hydrogen producer 1000n) shown in Fig. 25, a negative voltage is applied to the electrostatic field applying positive electrode 1002 of the accelerator member, and the electrons adhered to the insulating member 1017 experience repulsion force by the negative electric field. The repulsive force of the negative electric field drives the adhered electrons therefrom. As a result, these electrons migrate and are wiped out from the insulating member 1017. In the next positive half-cycle, there is no adhered electrons interfering with the field emission, and the electron emission by the electric field is effectuated well, so that the thermal energy is efficiently used for the energy source for the hydrogen production.

When the frequency of the alternate current source 1001b is low, the period of negative half-cycle is extended and the cessation period of electron emission is extended, causing the energy conversion efficiency to decrease. In such a case, in order to enhance the energy conversion efficiency, the frequency of the alternate current source 1001b should be set to a higher frequency. However, if the frequency of the alternate current source 1001b is too high, then the emitted electrons are repelled by the negative electric field and are kicked back to the electron emitting electrode 1005 before reaching the electron collecting electrode 1004. Preferably, the suitable high frequency range may be in the order of approximately several kilo-hertz. With the frequency being in this range, hydrogen can be efficiently produced.

The hydrogen producer 1000n can also produce hydrogen gas similarly to the hydrogen producer 1000, so that the hydrogen gas can be supplied to the engine 50 of the motor vehicle with thermal electric power generator as fuel.

The hydrogen producer 1000n having the configuration as has been described above can also generate thermal electric power and can produce and supply hydrogen when it is installed in a motor vehicle with thermal electric power generator.

### [ Sixteenth Modified Example ]

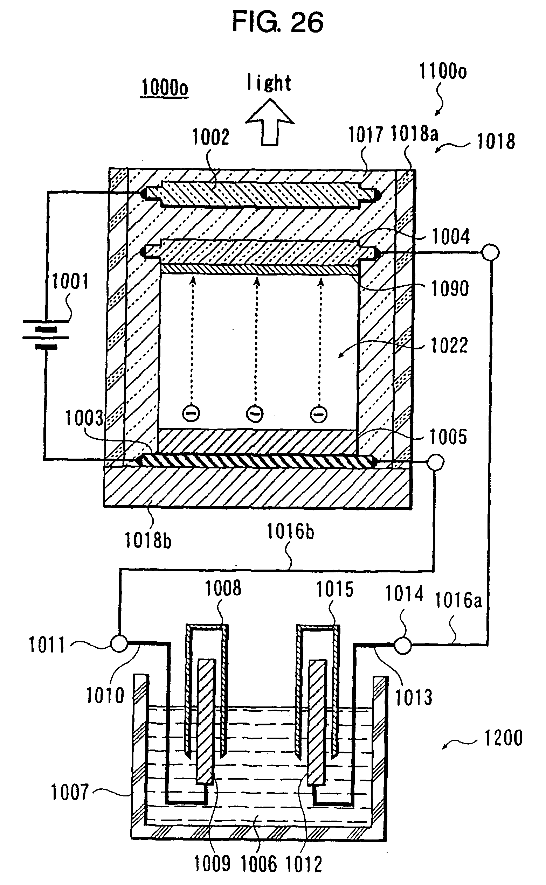

Now the sixteenth modified example of the hydrogen producer comprising a thermal electric power generator and an electrolyzer is described in greater details herein below with reference to Fig. 26. The same reference numerals are used for the same elements as those of the first and twelfth modified examples, and only the different elements are described in detail.

As shown in Fig. 26, the hydrogen producer 1000o comprises a thermal electric power generator 1100o and an electrolyzer 1200.

As shown in Fig. 26, the hydrogen producer 1000o has a fluorescent substance 1090 on the surface, which faces the electron emitting electrode 1005, of the electron collecting electrode 1004 of the hydrogen producer 1000k shown in Fig. 19.

The fluorescent substance 1090 is a material which has a property of emitting light (for instance, the emission of excited light) when an electron collide therewith.

The electrostatic field applying positive electrode 1002 and the electron collecting electrode 1004 in the thermal electric power generator 1100o (the hydrogen producer 1000o) are made of a light transmitting material (for instance, a light transmitting, conductive resin). The insulating member 1017 is also made of an isolating material having a light transmitting property (such as silicon dioxide).

In the thermal electric power generator 1100o (the hydrogen producer 1000o), the electrons emitted from the electron emitting electrode 1005 are accelerated by the electric field developed by the voltage applied to the electrostatic field applying positive electrode 1002 so as to be moved toward the electron collecting electrode 1004. The fluorescent substance 1090 is disposed on the front surface of the electron collecting electrode 1004, and the electrons flew through the vacuum of the internal space 1022 collide with the fluorescent substance 1090. The energy developed by the collision of electrons with the fluorescent substance 1090 causes the fluorescent substance 1090 to emit fluorescent light. The light emitted by the fluorescent substance 1090 transmits through the electron collecting electrode 1004 and the electrostatic field applying positive electrode 1002, both having the light transmitting property, as well as the insulating member 1017, so as to be outputted to outside.

The electrons which contribute to the emission of light are absorbed by the electron collecting electrode 1004 through the fluorescent substance 1090, then transferred to the electrolyzer 1200 as the electricity (current), to thereby electrolyze the water to ultimately produce hydrogen.

It should be appreciated that the electrons absorbed by the electron collecting electrode 1004 may be stored in a load capacitor in order to use the electrons stored in the load capacitor as the electric energy.

As can be appreciated from the foregoing description, the hydrogen producer 1000o (the thermal electric power generator 1100o) can generate electric power, can produce hydrogen, and can emit light while producing hydrogen, and thus, the light output from the thermal electric power generator 1100o can be routed by means of an optical fiber, for example, to the passenger compartment and can be used for the illumination of the passenger compartment, making the system as a whole to be a highly efficient, energy saving apparatus. When the thermal electric power generator 1100o is used for other application than a motor vehicle with thermal electric power generator, the generated electricity as well as the produced light can be used in various places for various purposes.

The hydrogen producer 1000o can also produce hydrogen similarly to the hydrogen producer 1000, so that the hydrogen gas can be supplied to the engine 50 of the motor vehicle with thermal electric power generator as fuel.

The hydrogen producer 1000o having the configuration as has been described above can also generate thermal electric power and can produce and supply hydrogen when it is installed in a motor vehicle with thermal electric power generator.

In accordance with Richardson-Dushman law, the number of electrons emitted into a vacuum space from the electron emitting electrode 1005 increases exponentially in proportion to the absolute temperature. Consequently, when the temperature of heat source is relatively low, the electricity generated by the thermal electric power generator in accordance with the present invention can be used for increasing the temperature of the electron emitting electrode 1005 (carbon nanotubes) so as to cause a large number of electrons to be emitted to thereby generate electric power.

### [ Seventeenth Modified Example ]

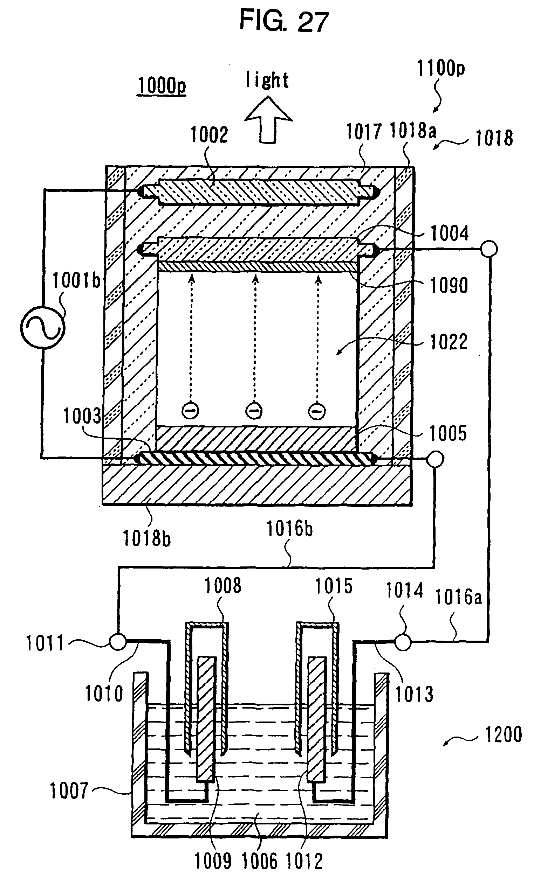

Now the seventeenth modified example of the hydrogen producer comprised of a thermal electric power generator and an electrolyzer is described in greater details herein below with reference to Fig. 27. The same reference numerals are used for the same elements as those of the first and sixteenth modified examples, and only the different elements are described in detail.

As shown in Fig. 27, the hydrogen producer 1000p comprises a thermal electric power generator 1100p and an electrolyzer 1200.

As shown in Fig. 27, the hydrogen producer 1000p has replaced the electrostatic field generating power supply 1001, which is a direct current power supply in the hydrogen producer 1000o shown in Fig. 26, with an alternate current power supply 1001b.

The hydrogen producer 1000p in this configuration can also produce hydrogen similarly to the hydrogen producer 1000 or the hydrogen producer 1000n, so that the hydrogen gas produced in this manner can be supplied to the engine 50 of the motor vehicle with thermal electric power generator as fuel.

The hydrogen producer 1000p having the configuration as has been described above can also generate thermal electric power and can produce and supply hydrogen when it is installed in a motor vehicle with thermal electric power generator.

In the above embodiments, although the thermal electric power generator 100 has been described to be attached to the outer wall surface of the engine 50, the present invention is not to be limited thereto. The thermal electric power generator 100 may also be installed, while being in contact with the internal wall surface of the engine 50, at a location close to the inside of the engine 50 where the temperature is higher, or may also be installed while using the heat conducting member 12 of the thermal electric power generator 100 for the inner wall of the engine 50.

The thermal electric power generator 100 may not be directly mounted on the engine 50. It may be installed in such a location as the vicinity of the engine 50 where the temperature is high.

In addition, the thermal electric power generator 100 generates electric power when it is installed at a location where the temperature is high in the motor vehicle with thermal electric power generator, and thus, it can be installed on the lower surface of hood or on the exhaust system of the motor vehicle with thermal electric power generator such as on a silencer-muffler of the motor vehicle with thermal electric power generator.

Although, in the preferred embodiments, the engine 50 of the motor vehicle with thermal electric power generator has been described to be a rotary engine, the present invention is not to be limited thereto, and the engine 50 can be either a conventional piston engine or reciprocating engine where the piston reciprocates in a cylinder bore, or any other type of engine.

Also, in the preferred embodiments, although the motor vehicle with thermal electric power generator has been described to be a hydrogen vehicle, which has a hydrogen engine for combusting hydrogen to output power, the present invention is not to be limited thereto, and rather the motor vehicle with thermal electric power generator may be an electric vehicle, which comprises a fuel cell for generating electric power from the hydrogen and oxygen produced by an electrolyzer and an electric motor driven by the generated electricity, or a hybrid motor vehicle which uses both the engine drive and the electric motor drive.

Furthermore, in the preferred embodiments, although the hydrogen producer has been described with reference to 17 patterns of structure (configurations) or modified examples shown in Figs. 8 to 27, the present invention is not to be considered to be limited thereto. The structure and configuration may be suitably changed. The term modified examples herein indicates some other preferred embodiments with the structure and configuration being modified or changed within the scope of the preferred embodiments in accordance with the present invention.

It should be appreciated by those skilled in the art that the present invention is not to be limited to the details herein given but may be suitably modified within the scope of the appended claims.

### Industrial Applicability

The thermal electric power generator of the motor vehicle with thermal electric power generator in accordance with the present invention, once installed at a location where the temperature is high and at a location to which the heat generated by the engine is transmitted, such as the periphery of the engine, the exhaust system, or the hood, can generate electric power by using the thermal energy of the generated heat. The thermal electric power generator supplies the generated electric power to the motor vehicle with thermal electric power generator, which can use the electric energy of the electric power as at least a part of the driving energy for driving the engine.

As can be appreciated from the foregoing description, it is effective for a motor vehicle having a high temperature place to be equipped with a thermal electric power generator for generating electric power by converting the thermal energy to the electric energy. Consequently, the motor vehicle with thermal electric power generator can be supplied with a stable electric power generated by the thermal electric power generator.

In summary, the thermal energy in the waste heat, which is the thermal energy produced by the engine of a motor vehicle while the engine works as a heat source, can be used for the driving energy of the motor vehicle with thermal electric power generator. The technology of effectively using the energy of the waste heat is indispensable for persistently sustaining the global environment.

## Claims

1. A motor vehicle with thermal electric power generator having a thermal electric power generator comprising:
an electron emitter for emitting electrons when heat is applied to said electron emitter;
an electron accelerator for accelerating electrons emitted from said electron emitter by applying an electric field between said electron emitter and said electron accelerator;
an electron collector for collecting electrons emitted from said electron emitter and accelerated by said electron accelerator; and
an insulating member for electrically insulating said electron collector from said electron accelerator,
wherein said thermal electric power generator causes electrons to migrate from said electron collector to thereby generate electric power by using said electron collector as a negative electrode and said electron emitter as a positive electrode, and
wherein said motor vehicle with thermal electric power generator uses the electrical energy generated by said thermal electric power generator installed at a location to which heat based on heat generation by an engine of said motor vehicle with thermal electric power generator is transmitted, as at least a part of driving energy for driving said engine.

2. A motor vehicle with thermal electric power generator having a thermal electric power generator comprising:
an electron emitter for emitting electrons when heat is applied to said electron emitter;
an electron accelerator for accelerating electrons emitted from said electron emitter by applying an electric field between said electron emitter and said electron accelerator;
an electron collector for collecting electrons emitted from said electron emitter and accelerated by said electron accelerator; and
an insulating member for electrically insulating said electron collector from said electron accelerator,
wherein said thermal electric power generator causes electrons to migrate from said electron collector to thereby generate electric power, and
wherein said motor vehicle with thermal electric power generator uses the electrical energy generated by said thermal electric power generator installed at a location to which heat base on heat generation of an engine of said motor vehicle with thermal electric power generator is transmitted, as at least a part of electrical energy for operating an electrical system of said motor vehicle with thermal electric power generator.

3. A motor vehicle with thermal electric power generator according to claim 1 or 2, wherein said thermal electric power generator is installed adjacently to the engine.

4. A motor vehicle with thermal electric power generator according to any one of claims 1 to 3, wherein said engine is a rotary engine.

5. A motor vehicle with thermal electric power generator according to any one of claims 1 to 4, wherein:
said engine is a hydrogen engine for outputting power by combusting hydrogen as its fuel,
said motor vehicle with thermal electric power generator further comprises an electrolyzer for electrolyzing water; and
said motor vehicle with thermal electric power generator supplies to said hydrogen engine the hydrogen and oxygen produced by supplying to said electrolyzer the electric power generated by said thermal electric power generator.

6. A motor vehicle with thermal electric power generator according to any one of claims 1 to 5, wherein said electron emitter is an electrode having a plurality of carbon nanotubes planted quasi-vertically on a conductive substrate.
